(19) Europäisches Patentamt / European Patent Office / Office européen des brevets

(11) **EP 3 899 447 B1**

(12) **EUROPÄISCHE PATENTSCHRIFT**

(45) Veröffentlichungstag und Bekanntmachung des Hinweises auf die Patenterteilung:
**20.09.2023   Patentblatt 2023/38**

(21) Anmeldenummer: **19806227.5**

(22) Anmeldetag: **21.11.2019**

(51) Internationale Patentklassifikation (IPC):
***G01F 1/84*** *(2006.01)*

(52) Gemeinsame Patentklassifikation (CPC):
**G01F 1/8436;** G01F 1/8427

(86) Internationale Anmeldenummer:
**PCT/EP2019/082037**

(87) Internationale Veröffentlichungsnummer:
**WO 2020/126282 (25.06.2020 Gazette 2020/26)**

(54) **CORIOLIS-MASSENDURCHFLUSS-MESSGERÄT**

CORIOLIS MASS FLOW METER

DÉBITMÈTRE MASSIQUE À EFFET CORIOLIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2018   DE 102018133116**

(43) Veröffentlichungstag der Anmeldung:
**27.10.2021   Patentblatt 2021/43**

(73) Patentinhaber: **Endress + Hauser Flowtec AG**
**4153 Reinach (CH)**

(72) Erfinder:
• **RIEDER, Alfred**
**84032 Landshut (DE)**
• **LALLA, Robert**
**79541 Lörrach (DE)**
• **SCHERRER, Rémy**
**68960 Oberdorf (FR)**

(74) Vertreter: **Hahn, Christian et al**
**Endress+Hauser Group Services**
**(Deutschland)AG +Co. KG**
**Colmarer Straße 6**
**79576 Weil am Rhein (DE)**

(56) Entgegenhaltungen:
US-A1- 2007 006 666     US-A1- 2007 186 686
US-A1- 2011 072 912     US-A1- 2018 143 064

**Beschreibung**

Die Erfindung betrifft ein Coriolis-Massendurchfluß-Meßgerät zum Messen eines Massenstroms eines fluiden Meßstoffs.

In der industriellen Meßtechnik werden - insb. auch im Zusammenhang mit der Regelung und Überwachung von automatisierten verfahrenstechnischen Prozessen - zur hochgenauen Ermittlung einer oder mehrerer Meßgrößen, beispielsweise eines Massenstroms und/oder einer Dichte, eines in einer Prozeßleitung, beispielsweise einer Rohrleitung, strömenden Meßstoffs, beispielsweise einer Flüssigkeiten, eines Gases oder einer Dispersion, oftmals jeweils mittels einer - zumeist mittels wenigstens eines Mikroprozessors gebildeten - Umformerschaltung sowie einem mit nämlicher Umformerschaltung elektrisch verbundenen, im Betrieb vom zu messenden Meßstoff durchströmten Meßaufnehmer vom Vibrationstyp gebildete Coriolis-Massendurchfluß-Meßgeräte verwendet. Beispiele für solche, beispielsweise auch als Dichte- und/oder Viskositäts-Meßgeräte, ausgebildeten Coriolis-Massendurchfluß-Meßgeräte sind u.a. in der EP-A 564 682, EP-A 816 807, der US-A 2002/0033043, der US-A 2006/0096390, der US-A 2007/0062309, der US-A 2007/0119264, der US-A 2008/0011101, der US-A 2008/0047362, der US-A 2008/0190195, der US-A 2008/0250871, der US-A 2010/0005887, der US-A 2010/0011882, der US-A 2010/0257943, der US-A 2011/0161017, der US-A 2011/0178738, der US-A 2011/0219872, der US-A 2011/0265580, der US-A 2011/0271756, der US-A 2012/0123705, der US-A 2013/0042700, der US-A 2016/0071639, der US-A 2016/0313162, der US-A 2016/0187176, der US-A 2017/0003156, der US-A 2017/0261474, der US-A 44 91 009, der US-A 47 56 198, der US-A 47 77 833, der US-A 48 01 897, der US-A 48 76 898, der US-A 49 96 871, der US-A 50 09 109, der US-A 52 87 754, der US-A 52 91 792, der US-A 53 49 872, der US-A 57 05 754, der US-A 57 96 010, der US-A 57 96 011, der US-A 58 04 742, der US-A 58 31 178, der US-A 59 45 609, der US-A 59 65 824, der US-A 60 06 609, der US-A 60 92 429, der US-B 62 23 605, der US-B 63 11 136, der US-B 64 77 901, der US-B 65 05 518, der US-B 65 13 393, der US-B 66 51 513, der US-B 66 66 098, der US-B 67 11 958, der US-B 68 40 109, der US-B 68 83 387, der US-B 69 20 798, der US-B 70 17 424, der US-B 70 40 181, der US-B 70 77 014, der US-B 71 43 655, der US-B 72 00 503, der US-B 72 16 549, der US-B 72 96 484, der US-B 73 25 462, der US-B 73 60 451, der US-B 76 65 369, der US-B 77 92 646, der US-B 79 54 388, der US-B 82 01 460, der US-B 83 33 120, der US-B 86 95 436, der WO-A 00/19175, der WO-A 00/34748, der WO-A 01/02812, der WO-A 01/02816, der WO-A 01/71291, der WO-A 02/060805, der WO-A 2005/050145, der WO-A 2005/093381, der WO-A 2007/043996, der WO-A 2008/013545, der WO-A 2008/059262, der WO-A 2009/148451, der WO-A 2010/099276, der WO-A 2013/092104, der WO-A 2014/151829, der WO-A 2016/058745, der WO-A 2017/069749, der WO-A 2017/123214, der WO-A 2017/137347, der WO-A 2017/143579, der WO-A 2018/160382,der WO-A 2018/174841, der WO-A 85/05677, der WO-A 88/02853, der WO-A 88/03642, der WO-A 89/00679, der WO-A 94/21999, der WO-A 95/03528, der WO-A 95/16897, der WO-A 95/29385, der WO-A 95/29386, der WO-A 98/02725, der WO-A 99/40 394, WO-A 2018/028932, der WO-A 2018/007176, der WO-A 2018/007185 oder der nicht vorveröffentlichten deutschen Patentanmeldung DE102018102831.8 beschrieben.

Der Meßaufnehmer eines jeden der darin gezeigten Coriolis-Massendurchfluß-Meßgeräte umfaßt wenigstens ein Vibrationselement, das typischerweise als ein zumindest abschnittsweise gerades und/oder zumindest abschnittsweise gekrümmtes, z.B. U-, V-, S-, Z- oder Ω-artig geformtes, Meßrohr mit einem von einer Rohrwand umgebenen Lumen zum Führen des Meßstoffs ausgebildet ist, oder das - wie u.a. auch in der WO-A 2018/160382, der US-A 2016/0187176 oder der vorbezeichneten Patentanmeldung DE102018102831.8 gezeigt - beispielsweise auch als ein innerhalb eines Lumens eines vom Meßstoff durchströmten Rohrs plaziertes Verdrängerelement ausgebildet sein kann. Das wenigstens eine Vibrationselement ist dafür eingerichtet, vom Meßstoff kontaktiert, beispielsweise nämlich vom Meßstoff durchströmt und/oder umströmt, und währenddessen vibrieren gelassen zu werden, insb. derart, daß es Nutzschwingungen, nämlich mechanische Schwingungen um eine Ruhelage mit einer auch von der Dichte des Mediums mitbestimmten, mithin als Maß für die Dichte verwendbaren Nutzfrequenz ausführt. Bei herkömmlichen, nicht zuletzt Coriolis-Massendurchfluß-Meßgeräten mit als Meßrohr ausgebildetem Vibrationselement, dienen typischerweise Biegeschwingungen auf einer natürlichen Resonanzfrequenz als Nutzschwingungen, beispielsweise solche Biegeschwingungen, die einem dem Meßaufnehmer immanenten natürlichen Biegeschwingungsgrundmode entsprechen, in dem die Schwingungen des Vibrationselements solche Resonanzschwingungen sind, die genau einen Schwingungsbauch aufweisen. Die Nutzschwingungen sind bei einem zumindest abschnittsweise gekrümmtem Meßrohr als Vibrationselement zudem typischerweise so ausgebildet, daß das nämliches Meßrohr um eine ein einlaßseitiges und ein außlaßseitiges Ende des Meßrohrs imaginär verbindenden gedachte Schwingungsachse nach Art eines an einem Ende eingespannten Auslegers pendelt, während hingegen bei Meßaufnehmern mit einem geraden Meßrohr als Vibrationselement die Nutzschwingungen zumeist Biegeschwingungen in einer einzigen gedachten Schwingungsebene sind.

Es ist zudem bekannt, das wenigstens eine Vibrationselement, beispielsweise zwecks Durchführung wiederkehrender Überprüfungen des Meßaufnehmers während des Betriebs des Meßgeräts, gelegentlich auch zu zeitlich andauernden erzwungenen Schwingungen außer Resonanz anzuregen oder gelegentlich auch freie gedämpfte Schwingungen des wenigstens einen Vibrationselements zu ermöglichen sowie nämliche Schwingungen jeweils auszuwerten, etwa um, wie u.a. auch in der vorgenannten EP-A 816 807, US-A 2011/0178738 oder US-A 2012/0123705 beschrieben, allfällige Beschädigungen des wenigstens einen Vibrationselements möglichst frühzeitig zu detektieren, die eine unerwünschte Verringerung der Meßgenauigkeit und/oder der Betriebssicherheit des jeweiligen Meßgeräts bewirken können.

Bei Meßaufnehmern mit zwei jeweils als Meßrohr ausgebildeten Vibrationselementen sind diese zumeist über ein sich zwischen den Meßrohren und einem einlaßseitigen Anschlußflansch erstreckenden einlaßseitig Verteilerstück sowie über ein sich zwischen den Meßrohren und einem auslaßseitigen Anschlußflansch erstreckenden auslaßseitig Verteilerstück in die jeweilige Prozeßleitung eingebunden. Bei Meßaufnehmern mit einem einzigen Meßrohr als Vibrationselement kommuniziert letzteres zumeist über ein einlaßseitig einmündendes Verbindungsrohr sowie über ein auslaßseitig einmündendes Verbindungsrohr mit der Prozeßleitung. Ferner umfassen Meßaufnehmer mit einem einzigen Meßrohr als Vibrationselement jeweils wenigstens ein weiteres, nämlich als ein, beispielsweise rohr-, kasten- oder plattenförmigen, Gegenschwinger ausgebildetes, gleichwohl nicht vom Meßstoff kontaktiertes Vibrationselement, das unter Bildung einer ersten Kopplungszone einlaßseitig an das Meßrohr gekoppelt ist und der unter Bildung einer zweiten Kopplungszone auslaßseitig an das Meßrohr gekoppelt ist, und das im Betrieb im wesentlichen ruht oder entgegengesetzt zum Meßrohr oszilliert. Das dabei mittels Meßrohr und Gegenschwinger gebildete Innenteil des Meßaufnehmers ist zumeist allein mittels der zwei Verbindungsrohre, über die das Meßrohr im Betrieb mit der Prozeßleitung kommuniziert, in einem schutzgebenden Aufnehmer-Gehäuse gehaltert, insb. in einer Schwingungen des Innenteils relativ zum Aufnehmer-Gehäuse ermöglichenden Weise. Bei den beispielsweise in der US-A 52 91 792, der US-A 57 96 010, der US-A 59 45 609, der US-B 70 77 014, der US-A 2007/0119264, der WO-A 01/02 816 oder auch der WO-A 99/40 394 gezeigten Meßaufnehmern mit einem einzigen, im wesentlichen geraden Meßrohr sind letzteres und der Gegenschwinger, wie bei herkömmlichen Meßaufnehmern durchaus üblich, zueinander im wesentlichen koaxial ausgerichtet, indem der Gegenschwinger als im wesentlichen gerader Hohlzylinder ausgebildet und im Meßaufnehmer so angeordnet ist, daß das Meßrohr zumindest teilweise vom Gegenschwinger ummantelt ist. Als Materialien für solche Gegenschwinger kommen, insb. auch bei Verwendung von Titan, Tantal oder Zirkonium für das Meßrohr, zumeist vergleichsweise kostengünstige Stahlsorten, wie etwa Baustahl oder Automatenstahl, zum Einsatz.

Zum aktiven Anregen bzw. Aufrechterhalten von Schwingungen des wenigstens einen Vibrationselements, nicht zuletzt auch den vorbezeichneten Nutzschwingungen, weisen Meßaufnehmer vom Vibrationstyp des weiteren wenigstens einen im Betrieb auf das wenigstens eine Vibrationselement einwirkenden elektromechanischen, typischerweise ebenfalls elektrodynamischen Schwingungserreger auf. Der mittels eines Paars elektrischer Anschlußleitungen, beispielsweise in Form von Anschlußdrähten und/oder inform von Leiterbahnen einer flexiblen Leiterplatte, mit der vorbezeichneten Umformerschaltung elektrisch verbundene Schwingungserreger dient im besonderen dazu, angesteuert von einem in der Umformerschaltung vorgesehenen Antriebselektronik generierten und entsprechend konditionierten, nämlich zumindest an sich verändernde Schwingungseigenschaften des wenigstens einen Vibrationselemnts angepaßten elektrischen Treibersignal eine mittels nämlichen Treibersignals eingespeiste elektrische Erregerleistung in eine an einem vom Schwingungserreger gebildeten Angriffspunkt auf das wenigstens eine Vibrationselement wirkende Antriebskraft zu wandeln. Die Antriebselektronik ist im besonderen auch dafür eingerichtet, das Treibersignal mittels interner Regelung so einzustellen, daß es eine der anzuregenden, gelegentlich auch zeitlich ändernden Nutzfrequenz entsprechende Signalfrequenz aufweist, ggf. als bei einer durch einen Erregerstrom, nämlich einen elektrischen Strom des Treibersignals vorgegebenen Schwingungsamplitude. Das Treibersignal kann beispielsweise im Betrieb des Meßgeräts gelegentlich auch abgeschaltet werden, beispielsweise zwecks Ermöglichen der vorbezeichneten freien gedämpften Schwingungen des wenigstens einen Vibrationselements oder beispielsweise, wie in der eingangs erwähnten WO-A 2017143579 vorgeschlagen, um die Antriebselektronik vor einer Überlastung zu schützen.

Schwingungserreger marktgängiger Meßaufnehmer vom Vibrationstyp sind typischerweise nach Art einer nach dem elektrodynamischen Prinzip arbeitenden Schwingspule, nämlich einer Luftspule-Magnet-Anordnung aufgebaut, die mittels einer - bei Meßaufnehmern mit einem Meßrohr und einem daran gekoppelten Gegenschwinger gebildeten Vibrationselementen zumeist an letzterem fixierten - Luftspule, nämlich einer keinen magnetischen Kern, sondern vielmehr Luft einschließenden Spule sowie einen mit der wenigstens einen Luftspule wechselwirkenden als Anker dienenden - beispielsweise entsprechend an vorbezeichnetem Meßrohr fixierten - Permanentmagneten gebildet ist und bei der die jeweilige Luftspule zumindest teilweise in einem einen Magnetischer Fluß führenden Luftspalt des Permanentmagneten positioniert ist. Permanentmagneten und Luftspule sind dabei üblicherweise so ausgerichtet, daß sie zueinander im wesentlichen koaxial verlaufen, und zudem dafür eingerichtet, relativ zueinander bzw. gegengleich bewegt zu werden, derart, daß bei durch die Luftspule fließendem Erregerstrom der Permanentmagnet und die in dessen Luftspalt befindliche Luftspule im wesentlichen translatorisch hin- und her bewegt werden. Zudem ist bei herkömmlichen Meßaufnehmern der Schwingungserreger zumeist so ausgebildet und plaziert, daß er im wesentlichen mittig an das wenigstens eine Meßrohr angreift. Alternativ zu einem eher zentral und direkt auf das wenigstens eine Vibrationselement wirkenden Schwingungserreger können, wie u.a. in der eingangs erwähnten US-A 60 92 429, beispielsweise auch mittels zweier nicht im Zentrum des wenigstens einen Vibrationselement, sondern eher ein- bzw. auslaßseitig an diesem fixierten Schwingungserreger zum aktiven Anregung mechanischer Schwingungen des wenigstens einen Vibrationselements verwendet werden oder, wie u.a. in der US-B 62 23 605 oder der US-A 55 31 126 vorgeschlagen, beispielsweise auch mittels eines zwischen dem wenigstens einen Vibrationselement und dem Aufnehmer-Gehäuse wirkenden Schwingungserreger gebildete Erregeranordnungen verwendet werden.

Aufgrund der Nutzschwingungen des wenigstens einen Vibrationselements, werden - nicht zuletzt auch für den Fall, daß die Nutzschwingungen des wenigstens einen Vibrationselements quer zur Strömungsrichtung auf den strömenden Meßstoff wirkende Biegeschwingungen sind - im Meßstoff bekanntlich auch vom momentanen Massenstrom abhängige Corioliskräfte induziert. Diese wiederum können vom Massenstrom abhängige, sich den Nutzschwingungen überlagernde Coriolisschwingungen des Vibrationselements, ebenfalls mit Nutzfrequenz, bewirken, derart, daß zwischen einlaßseitigen und auslaßseitigen Schwingungsbewegungen des die Nutzschwingungen ausführenden und zugleich vom Medium durchströmten wenigstens einen Meßrohrs eine auch vom Massenstrom abhängige, mithin auch als Maß für die Massendurchflußmessung nutzbare Laufzeit- bzw. Phasendifferenz detektiert werden kann. Bei einem zumindest abschnittsweise gekrümmtem Meßrohr als Vibrationselement, bei dem für die Nutzschwingungen eine Schwingungsform, in der nämliches Meßrohr nach Art eines an einem Ende eingespannten Auslegers pendeln gelassen wird, gewählt ist, entsprechen die resultierenden Coriolisschwingungen beispielsweise jenem - gelegentlich auch als Twist-Mode bezeichneten - Biegeschwingungsmode, in dem das Meßrohr Drehschwingungen um eine senkrecht zur erwähnten gedachten Schwingungsachse ausgerichtete gedachte Drehschwingungsachse ausführt, wohingegen bei einem geraden Meßrohr als Vibrationselement, dessen Nutzschwingungen als Biegeschwingungen in einer einzigen gedachten Schwingungsebene ausgebildet sind, die Coriolisschwingungen beispielsweise als zu den Nutzschwingungen im wesentlichen koplanare Biegeschwingungen sind.

Zum Erfassen sowohl einlaßseitiger als auch auslaßseitiger Schwingungsbewegungen des wenigstens einen Vibrationselements, nicht zuletzt auch den den Nutzschwingungen entsprechenden, und zum Erzeugen wenigstens zweier von der zu messenden Massenstrom beeinflußten elektrischen Schwingungsmeßsignalen weisen Meßaufnehmer der in Rede stehenden Art desweiteren zwei oder mehr entlang des wenigstens einen Vibrationselements voneinander beabstandete, beispielsweise jeweils mittels eines eigenen Paars elektrischer Anschlußleitungen mit eine in der vorbezeichneten Umformerschaltung elektrisch verbundenen, Schwingungssensoren auf. Jeder der Schwingungssensoren ist eingerichtet, die vorbezeichneten Schwingungsbewegungen an einem jeweiligen Meßpunkt zu erfassen und jeweils in ein nämliche Schwingungsbewegungen repräsentierendes elektrisches Schwingungsmeßsignal zu wandeln, das eine Nutzkomponente, nämlich eine (spektrale) Signal- bzw. nämlich eine Wechselspannungskomponente mit einer der Nutzfrequenz entsprechenden (Signal-)Frequenz und einer von der Nutzfrequenz und einem im jeweiligen Schwingungssensor etablierten magnetischer Fluß abhängigen (Signal-)Amplitude enthält, und nämliches Schwingungsmeßsignal jeweils der Umformerschaltung, beispielsweise nämlich einer mittels wenigstens eines Mikroprozessors gebildeten Meß- und Steuer-Elektronik der Umformerschaltung, zur weiteren, ggf. auch digitalen Verarbeitung zur Verfügung zu stellen. Zudem sind die wenigstens zwei Schwingungssensoren so ausgestaltet und angeordnet, daß die vorbezeichnete Nutzkomponente der damit generierten Schwingungsmeßsignale zudem jeweils einen vom Massenstrom abhängigen Phasenwinkel aufweisen, derart zwischen den Nutzkomponenten beider Schwingungsmeßsignale eine vom Massenstrom abhängige Laufzeit- bzw. Phasendifferenz meßbar ist. Basierend auf nämlicher Phasendifferenz ermittelt die Umformerschaltung bzw. deren Meß- und Steuer-Elektronik wiederkehrend den Massenstrom repräsentierende Massenstrom-Meßwerte. In Ergänzung zur Messung des Massenstroms kann - etwa basierend auf der Nutzfrequenz und/oder auf einer für die Anregung bzw. Aufrechterhaltung der Nutzschwingungen erforderlichen elektrischen Erregerleistung bzw. einer anhand dessen ermittelten Dämpfung der Nutzschwingungen - zusätzlich auch die Dichte und/oder die Viskosität des Mediums gemessen und von der Umformerschaltung zusammen mit dem gemessenen Massenstrom in Form qualifizierter Meßwerte ausgegeben werden. Typischerweise sind die beiden Schwingungssensoren als elektrodynamische Schwingungssensoren ausgebildet, insb. nämlich gleichermaßen wie der wenigstens eine Schwingungserreger jeweils mittels einer - hier als Tauchspule dienlichen - Luftspule-Magnet-Anordnung gebildet, bei der ebenfalls jeweils eine Luftspule zumindest teilweise in einem einen magnetischer Fluß führenden Luftspalt eines zugehörigen Permanentmagneten positioniert ("eingetaucht") ist und bei der zudem Luftspule und Permanentmagnet eingerichtet sind, zwecks Generierens einer Induktionsspannung relativ zueinander bewegt zu werden, derart, daß die Luftspule im Luftspalt im wesentlichen translatorisch hin- und her bewegt wird. Der Permanentmagnet und die Luftspule sind dabei üblicherweise so ausgerichtet, daß sie zueinander im wesentlichen koaxial verlaufen.

Es ist bekannt, daß bei Verwendung von elektrodynamischen Schwingungssensoren die vorbezeichneten Phasenwinkel der Nutzkomponenten jedes der Schwingungsmeßsignale trotz gleichbleibendem Massenstroms zeitlich ändern können bzw. daß die zwischen den Nutzkomponenten etablierte Phasendifferenz gelegentlich eine nicht vom Massenstrom abhängige Störkomponente aufweisen kann, derart, ein signifikanter Phasenfehler, nämlich eine nicht mehr vernachlässigbare zusätzliche Änderung der Phasendifferenz zu beobachten ist. Weiterführende Untersuchungen an konventionellen Coriolis-Massendurchfluß-Meßgeräten haben gezeigt, daß solche Phasenfehler im besonderen für auch den Fall auftreten können, daß das jeweilige Coriolis-Massendurchfluß-Meßgerät in der Nähe eines oder mehreren Elektromotoren, Transformatoren, Magneten, Wechselrichtern oder anderweitigen hohe elektrische Ströme, insb. auch Gleichströme, führenden Anlagenteilen stationiert, mithin einem gelegentlich auch sehr starken externen, nämlich von außerhalb des Coriolis-Massendurchfluß-Meßgeräts verursachten, gleichwohl sich auch innerhalb des Coriolis-Massendurchfluß-Meßgeräts ausbreitendes zusätzlichen Magnetfeld ausgesetzt ist.

Wie u.a. auch in der eingangs erwähnten WO-A 01/02812 oder US-B 76 65 369 erörtert, besteht eine Möglichkeit zur Reduzierung des vorbezeichneten, auf externe Magnetfelder zurückzuführenden Phasenfehlers beispielsweise darin, das Aufnehmer-Gehäuse durch die Verwendung von Materialien mit einer vergleichsweise hohen relativen magnetischen Leitfähigkeit, beispielsweise Automatenstahl oder Baustahl, so auszubilden, daß dessen effektiver magnetischer Widerstand signifikant verringert wird. Eine weitere Möglichkeit zur Vermeidung von durch externe Magnetfelder bedingten Meßfehlern bestünde, wie in der US-B 76 65 369 ebenfalls vorgeschlagen, auch darin, in den jeweiligen Magnetbechern der Schwingungssensoren die durch externe Magnetfelder hervorgerufenen Wirbelströme unterdrückende Schlitze vorzusehen. Untersuchungen haben allerdings gezeigt, daß die vorbezeichneten Maßnahmen zwar durchaus die in das Aufnehmer-Gehäuse eindringenden Magnetfelder schwächen und dadurch auch eine Beitrag zur Reduzierungen der vorbezeichneten Störkomponente leisten können, daß aber selbst durch eine Vereinigung beider Maßnahmen der Phasenfehler mit vertretbarem technischen Aufwand nicht immer unterhalb eines noch tolerierbaren Ausmaßes verringert werden kann. Im Ergebnis kann bei einem herkömmlichen Coriolis-Massendurchfluß-Meßgerät dementsprechend nicht ohne weiteres ausgeschlossen werden, daß der Massenstrom aufgrund eines unbekannten externen, ggf. auch lediglich vorübergehend etablierten und/oder schwankenden, Magnetfeldes unerkannt mit deutlich erhöhten Meßfehlern gemessen wird bzw. entsprechende Massenstrom-Meßwerte mit signifikant verringerter Meßgenauigkeit ausgegeben werden.

US2018143064 offenbart einen Coriolis-Durchflussmesser, bei dem entweder eine Amplitude oder eine Phase bei der Anregungsfrequenz oder einer ihrer Harmonischen ausgewertet und dann mit einem Referenzwert verglichen wird. Sie beruht auf der Lehre, dass nichtlineare Störungen eines harmonischen, angeregten linearen Systems zu nichtlinearen Reaktionssignalen führen, d. h. sie haben keinen Einfluss auf die Amplitude und/oder die Phase der im linearen Fall gemessenen Schwingung. Ein Wert für die gesamte harmonische Verzerrung (THD) kann berechnet werden. Ausgehend vom vorbezeichneten Stand der Technik besteht eine Aufgabe der Erfindung darin, Coriolis-Massendurchfluß-Meßgeräte dahingehend zu verbessern, daß damit auch die Anwesenheit eines externen Magnetfelds bzw. dessen Einfluß auf die Meßgenauigkeit zumindest detektiert, beispielsweise auch zeitnah entsprechend vermeldet werden kann.

Zur Lösung der Aufgabe besteht die Erfindung in einem Coriolis-Massendurchfluß-Meßgerät, beispielsweise nämlich einem Coriolis-Massendurchfluß-/Dichte-Meßgerät, zum Messen eines Massenstroms eines fluiden Meßstoffs - beispielsweise eines Gases, einer Flüssigkeit oder einer Dispersion -, welches Coriolis-Massendurchfluß-Meßgerät einen Meßwandler, der wenigstens ein Vibrationselement, eine Erregeranordnung sowie eine Sensoranordnung aufweist und der eingerichtet ist, den Meßstoff zu führen, nämlich zumindest zeitweise vom Meßstoff durchströmt zu werden, sowie eine mit dem Meßwandler, nämlich sowohl mit dessen Erregeranordnung als auch dessen Sensoranordnung elektrisch gekoppelte, beispielsweise mittels wenigstens eines Mikroprozessors gebildete, elektronische Umformerschaltung umfaßt. Das wenigstens eine Vibrationselement ist eingerichtet, vom strömenden Meßstoff kontaktiert und währenddessen vibrieren gelassen zu werden und die Erregeranordnung ist eingerichtet, dorthin eingespeiste elektrische Leistung in erzwungene mechanische Schwingungen des Vibrationselements bewirkende mechanische Leistung zu wandeln. Die Umformerschaltung wiederum ist eingerichtet, ein elektrisches Treibersignal zu generieren und damit elektrische Leistung in die Erregeranordnung einzuspeisen, derart, daß das Vibrationselement zumindest anteilig Nutzschwingungen, nämlich erzwungene mechanische Schwingungen mit wenigstens einer Nutzfrequenz, nämlich einer durch das elektrische Treibersignal vorgegebenen, beispielsweise einer Resonanzfrequenz des Meßwandlers entsprechenden, Schwingungsfrequenz ausführt, die geeignet sind, im strömendem Meßstoff vom Massenstrom abhängige Corioliskräfte zu bewirken. Zum Erfassen mechanischer Schwingungen des wenigstens einen Vibrationselements, beispielsweise nämlich dessen Nutzschwingungen, weist die Sensoranordnung einen elektrodynamischen ersten Schwingungssensor und wenigstens einen, beispielsweise zum ersten Schwingungssensor baugleichen, elektrodynamischen zweiten Schwingungssensor auf. Der erste Schwingungssensor ist eingerichtet, Schwingungsbewegungen des wenigstens einen Vibrationselements an einem ersten Meßpunkt in ein elektrisches erstes Schwingungsmeßsignal der Sensoranordnung zu wandeln, derart, daß nämliches erstes Schwingungsmeßsignal sowohl wenigstens eine erste Nutzkomponente, nämlich eine Wechselspannungskomponente mit einer der Nutzfrequenz entsprechenden Frequenz, und mit einer von der Nutzfrequenz und einem ersten magnetischen Fluß, nämlich einem magnetischen Fluß durch den ersten Schwingungssensor abhängigen Amplitude als auch wenigstens eine erste Oberschwingungskomponente, nämlich eine Wechselspannungskomponente mit einer einem ganzzahligen Vielfachen, beispielsweise nämlich einem Doppelten, der Nutzfrequenz entsprechenden Frequenz, und mit einer vom ersten magnetischen Fluß abhängigen Amplitude aufweist. Der zweite Schwingungssensor ist eingerichtet, Schwingungsbewegungen des wenigstens einen Vibrationselements an einem vom ersten Meßpunkt entfernten zweiten Meßpunkt in ein elektrisches zweites Schwingungsmeßsignal der Sensoranordnung zu wandeln, derart, daß nämliches zweites Schwingungsmeßsignal sowohl wenigstens eine zweite Nutzkomponente, nämlich eine Wechselspannungskomponente mit einer der Nutzfrequenz entsprechenden Frequenz, und mit einer von der Nutzfrequenz und einem zweiten magnetischen Fluß, nämlich einem magnetischen Fluß durch den zweiten Schwingungssensor abhängigen Amplitude als auch wenigstens eine zweite Oberschwingungskomponente, nämlich eine Wechselspannungskomponente mit einer einem ganzzahligen Vielfachen, beispielsweise nämlich einem Doppelten, der Nutzfrequenz entsprechenden Frequenz, und mit einer vom zweiten magnetischen Fluß abhängigen Amplitude aufweist. Darüberhinaus ist die Umformerschaltung zudem auch dafür eingerichtet, die ersten und zweiten Schwingungsmeßsignale zu empfangen und auszuwerten, nämlich sowohl anhand der ersten und zweiten Schwingungsmeßsignale den Massenstrom repräsentierende, beispielsweise digitale, Massenstrom-Meßwerte zu ermitteln als auch anhand wenigstens eines der ersten und zweiten Schwingungsmeßsignale Kennzahlwerte für wenigstens eine Sensoren-Kennzahl, nämlich eine zumindest eine der ersten und zweiten Oberschwingungskomponenten charakterisierende und/oder von der Amplitude zumindest einer der ersten und zweiten Oberschwingungskomponenten abhängige Kennzahl, wie z.B. einen Spitzenwert der ersten Oberschwingungskomponente und/oder einen Effektivwert der ersten Oberschwingungskomponente und/oder einen Gleichrichtwert der ersten Oberschwingungskomponente und/oder eine Schwingungsbreite der ersten Oberschwingungskomponente und/oder einen Spitzenwert der zweiten Oberschwingungskomponente und/oder einen Effektivwert der zweiten Oberschwingungskomponente und/oder einen Gleichrichtwert der zweiten Oberschwingungskomponente und/oder eine Schwingungsbreite der zweiten Oberschwingungskomponente, zu ermitteln, beispielsweise derart, daß die wenigstens eine Sensoren-Kennzahl einen Klirrfaktor eines der ersten und zweiten Schwingungsmeßsignale oder einen Klirrfaktor einer Summe der ersten und zweiten Schwingungsmeßsignale oder einen Scheitelfaktor eines der ersten und zweiten Schwingungsmeßsignale oder einen Scheitelfaktor einer Summe der ersten und zweiten Schwingungsmeßsignale oder eine gesamte harmonische Verzerrung (THD) eines der ersten und zweiten Schwingungsmeßsignale oder eine gesamte harmonische Verzerrung (THD) einer Summe der ersten und zweiten Schwingungsmeßsignale repräsentiert; wobei jede der ersten und zweiten Nutzkomponenten jeweils einen vom Massenstrom abhängigen Phasenwinkel aufweist; und wobei die Umformerschaltung eingerichtet ist, die Massenstrom-Meßwerte anhand einer Phasendifferenz zwischen den ersten und zweiten Nutzkomponenten, nämlich einer Differenz zwischen dem Phasenwinkel der ersten Nutzkomponente und dem Phasenwinkel der zweiten Nutzkomponente zu berechnen, sowie einen oder mehrere Kennzahlenwerte für die Sensoren-Kennzahl mit wenigstens einem für die Sensoren-Kennzahl ermittelten Bezugswert zu vergleichen, der einen auf ein externes Magnetfeld (H1) zurückzuführenden Phasenfehler, nämlich einen vom externen Magnetfeld (H1) abhängigen Anteil der Phasendifferenz zwischen den ersten und zweiten Nutzkomponenten repräsentiert.

Nach einer ersten Ausgestaltung der Erfindung ist ferner vorgesehen, daß die Umformerschaltung eingerichtet ist, einen oder mehrere Kennzahlenwerte für die Sensoren-Kennzahl jeweils mit einem oder mehreren für die Sensoren-Kennzahl, beispielsweise vom Hersteller des Coriolis-Massendurchfluß-Meßgeräts und/oder bei der Herstellung des Coriolis-Massendurchfluß-Meßgerät, ermittelten Bezugswerten, beispielsweise einem oder mehreren eine verminderte Funktionstüchtigkeit der Sensoranordnung repräsentierenden Bezugswerten und/oder einem oder mehreren eine Fehlfunktion der Sensoranordnung repräsentierenden Bezugswerten und/oder einem oder mehreren ein nicht mehr intaktes Coriolis-Massendurchfluß-Meßgerät repräsentierenden Bezugswerten, zu vergleichen.

Nach einer zweiten Ausgestaltung der Erfindung ist ferner vorgesehen, daß die Umformerschaltung eingerichtet ist, zu ermitteln, ob eine oder mehrere Kennzahlenwerte für die Sensoren-Kennzahl größer als der wenigstens eine Bezugswert für die Sensoren-Kennzahl ist, beispielsweise nämlich falls ein oder mehrere Kennzahlenwerte für die Sensoren-Kennzahl größer als ein oder mehrere eine verminderte Funktionstüchtigkeit der Sensoranordnung repräsentierende Bezugswerte und/oder größer als ein oder mehrere eine Fehlfunktion der Sensoranordnung repräsentierende Bezugswerte ist und/oder größer als ein oder mehrere ein nicht mehr intaktes Coriolis-Massendurchfluß-Meßgerät repräsentierenden Bezugswerten ist, eine dies signalisierende Meldung auszugeben.

Nach einer dritten Ausgestaltung der Erfindung ist vorgesehen, daß die Umformerschaltung eingerichtet ist, aus dem ersten Schwingungsmeßsignal eine erste Nutzkomponentenfolge, nämlich eine Sequenz von die Amplitude der ersten Nutzkomponentequantifizierenden digitalen Amplitudenwerten erzeugen, und/oder daß die Umformerschaltung eingerichtet ist, aus dem zweiten Schwingungsmeßsignal eine zweite Nutzkomponentenfolge, nämlich eine Sequenz von die Amplitude der zweiten Nutzkomponente quantifizierenden digitalen Amplitudenwerten erzeugen. Diese Ausgestaltung der Erfindung weiterbildend, ist die Umformerschaltung ferner eingerichtet, eine erste Oberschwingungskomponentenfolge, nämlich eine Sequenz von die Amplitude der ersten Oberschwingungskomponente quantifizierenden digitalen Amplitudenwerten zu generieren, und/oder ist die Umformerschaltung ferner eingerichtet, aus dem des zweiten Schwingungsmeßsignal eine zweite Oberschwingungskomponentenfolge, nämlich eine Sequenz von die Amplitude der zweiten Oberschwingungskomponente quantifizierenden digitalen Amplitudenwerten zu generieren. Diese Ausgestaltung der Erfindung weiterbildend ist die Umformerschaltung ferner eingerichtet, Kennzahlenwerte für die Sensoren-Kennzahl unter Verwendung sowohl wenigstens einer der ersten und zweiten Nutzkomponentenfolgen als auch wenigsten einer der ersten und zweiten Oberschwingungskomponentenfolgen zu berechnen.

Nach einer vierten Ausgestaltung der Erfindung ist ferner vorgesehen, daß die Umformerschaltung einen nicht-flüchtigen elektronischen Datenspeicher aufweist, der dafür eingerichtet ist, digitale Daten, beispielsweise auch ohne eine angelegte Betriebsspannung, vorzuhalten, beispielsweise nämlich einen oder mehrere vorab ermittelte Bezugswerte für die Sensoren-Kennzahl zu speichern. Diese Ausgestaltung der Erfindung weiterbildend ist ferner vorgesehen, daß im elektronischen Datenspeicher ein oder mehrere, beispielsweise vom Hersteller des Coriolis-Massendurchfluß-Meßgeräts und/oder bei der Herstellung des Coriolis-Massendurchfluß-Meßgeräts und/oder im Betrieb des Coriolis-Massendurchfluß-Meßgeräts vorab ermittelte, Bezugswerte für die Sensoren-Kennzahl, beispielsweise nämlich ein oder mehrere eine verminderte Funktionstüchtigkeit der Sensoranordnung repräsentierende Bezugswerte und/oder nämlich ein oder mehrere eine Fehlfunktion der Sensoranordnung repräsentierende Bezugswerte, gespeichert sind und/oder daß die Umformerschaltung eingerichtet ist, einen oder mehrere Kennzahlenwerte für die Sensoren-Kennzahl jeweils mit einem oder mehreren im Datenspeicher gespeicherten Bezugswerten für die Sensoren-Kennzahl zu vergleichen.

Nach einer fünften Ausgestaltung der Erfindung ist ferner vorgesehen, daß die Umformerschaltung eingerichtet ist, einen zumindest die Ermittlung der Kennzahlenwerte für die erste Sensoren-Kennzahl initiierenden Start-Befehl zu empfangen und auszuwerten, nämlich einen Eingang des Start-Befehls zu detektieren und daraufhin eine Ermittlung der Kennzahlenwerte für die erste Sensoren-Kennzahl in Gang zu setzen.

Nach einer sechsten Ausgestaltung der Erfindung ist ferner vorgesehen, daß die Umformerschaltung eingerichtet ist, einen die Ermittlung der Kennzahlenwerte für die erste Sensoren-Kennzahl zumindest vorübergehend unterbindenden Stop-Befehl zu empfangen und auszuwerten, nämlich einen Eingang des Stop-Befehls zu detektieren und daraufhin eine Ermittlung der Kennzahlenwerte für die erste Sensoren-Kennzahl zumindest vorübergehend anzuhalten.

Nach einer siebenten Ausgestaltung der Erfindung ist ferner vorgesehen, daß die Meß- und Steuerelektronik einen ersten Analog-zu-Digital-Wandler für das erste Schwingungsmeßsignal sowie einen zweiten Analog-zu-Digital-Wandler für das zweite Schwingungsmeßsignal aufweist.

Nach einer achten Ausgestaltung der Erfindung ist ferner vorgesehen, daß die Umformerschaltung eingerichtet ist, die Massenstrom Meßwerte mit einer Aktualisierungsrate zu ermitteln, die nicht kleiner, beispielsweise nämlich größer, ist als eine Aktualisierungsrate mit der die Umformerschaltung die Kennzahlenwerte für die Sensoren-Kennzahl ermittelt.

Nach einer zehnten Ausgestaltung der Erfindung ist ferner vorgesehen, daß der erste Schwingungssensor mittels einer ersten Tauchspule und der zweite Schwingungssensor mittels einer zweiten Tauchspule gebildet ist.

Nach einer elften Ausgestaltung der Erfindung ist ferner vorgesehen, daß der erste Schwingungssensor einen, beispielsweise unter Bildung des ersten Meßpunkts mechanisch mit dem wenigstens einen Vibrationselement verbundenen, ersten Permanentmagneten sowie eine erste Luftspule aufweist und daß der zweite Schwingungssensor einen, beispielsweise unter Bildung des zweiten Meßpunkts mechanisch mit dem wenigstens einen Vibrationselement verbundenen, zweiten Permanentmagneten sowie eine zweite Luftspule aufweist, derart, daß der erste Permanentmagnet einen den ersten magnetischen Fluß führenden ersten Luftspalt bildet und die erste Luftspule zumindest teilweise innerhalb nämlichen ersten Luftspalts positioniert ist, und daß der erste Permanentmagnet und die erste Luftspule eingerichtet sind, durch Schwingungsbewegungen des wenigstens einen Vibrationselements relativ zueinander bewegt zu werden und eine als erstes Schwingungsmeßsignal dienliche erste Induktionsspannung zu generieren, und derart, daß der zweite Permanentmagnet einen den zweiten magnetischen Fluß führenden zweiten Luftspalt bildet und die zweite Luftspule zumindest teilweise innerhalb nämlichen zweiten Luftspalts positioniert ist, und daß der zweite Permanentmagnet und die zweite Luftspule eingerichtet sind, durch Schwingungsbewegungen des wenigstens einen Vibrationselements relativ zueinander bewegt zu werden und eine als zweites Schwingungsmeßsignal dienliche zweite Induktionsspannung zu generieren.

Nach einer zwölften Ausgestaltung der Erfindung ist ferner vorgesehen, daß die Erregeranordnung zum Anregen von Schwingungen des wenigstens eine Meßrohrs einen, beispielsweise elektrodynamischen und/oder einzigen, Schwingungserreger aufweist.

Nach einer dreizehnten Ausgestaltung der Erfindung ist ferner vorgesehen, daß das wenigstens eine Vibrationselement mittels wenigstens eines, beispielsweise zumindest abschnittsweise geraden und/oder zumindest abschnittsweise kreisbogenförmigen, Rohrs mit einem von einer, beispielsweise metallischen, Rohrwand und einem davon umhüllten Lumen gebildet und dafür eingerichtet ist, von Meßstoff durchströmt und währenddessen vibrieren gelassen zu werden.

Ein Grundgedanke der Erfindung besteht darin, gelegentlich durch externe Magnetfelder auftretende Beeinflussung der Sensoranordnung von Coriolis-Massendurchfluß-Meßgeräten anhand von damit einhergehenden Änderungen der Amplituden wenigstens einer Oberschwingungskomponente der von der Sensoranordnung bereitgestellten Schwingunsgmeßsignale zu detektieren. Die Erfindung beruht u.a. auch auf der überraschenden Erkenntnis, daß ein externes, nämlich von außerhalb des Coriolis-Massendurchfluß-Meßgeräts verursachtes Magnetfeld typischerweise nicht nur die für die Messung des Massenstroms benötigten Nutzkomponenten der Schwingungsmeßsignale verfälscht, sondern im besonderen auch Einfluß auf die in den Schwingungsmeßsignalen regelmäßig ebenfalls enthaltenen Oberschwingungskomponenten mit jeweils einer einem ganzzahligen Vielfachen der Nutzfrequenz entsprechenden Frequenz nehmen kann, die wiederum nicht einer anderen, ggf. ebenfalls angeregten, Resonanzfrequenz des Meßaufnehmers entspricht, derart, daß die Amplitude wenigstens einer der vorbezeichneten Oberschwingungskomponenten signifikant von einem dafür vorgebbaren Bezugs- bzw. Referenzwert abweicht bzw. daß eine solche Abweichung der Amplitude wenigstens einer der Oberschwingungskomponenten jm Betrieb des jeweiligen Coriolis-Massendurchfluß-Meßgeräts als Indikator für eine verringerte Meßgenauigkeit aufgrund einer Störung durch ein externes Magnetfeld verwendet werden kann.

Ein Vorteil der Erfindung besteht u.a. darin, daß damit eine Detektion von die Meßgenauigkeit von Coriolis-Massendurchfluß-Meßgeräten beeinträchtigenden externen Magnetfeldern auch bereits anhand der im Betrieb von Coriolis-Massendurchfluß-Meßgeräten ohnehin generierten Schwingungsmeßsignale durchgeführt werden kann. Dementsprechend kann die Erfindung in vorteilhafter Weise allein durch eine entsprechende Modifikation der typsicherweise re-programmierbaren Umformerschaltungen auch bei bereit installierten konventionellen Coriolis-Massendurchfluß-Meßgeräten ohne weiteres nachgerüstet werden.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:

Fig. 1  ein, hier als Kompakt-Meßgerät ausgebildetes, Coriolis-Massendurchfluß-Meßgerät;

Fig. 2  schematisch nach Art eines Blockschaltbildes eine, insb. auch für ein Coriolis-Massendurchfluß-Meßgerät gemäß den Fig. 1 geeignete, Umformerschaltung mit daran angeschlossenem Meßwandler vom Vibrationtyp bzw. ein Coriolis-Massendurchfluß-Meßgerät gemäß den Fig. 1;

Fig. 3  ein Phasor-Diagramm (Zeigerdiagramm mit ruhenden Zeigern) für Signalkomponenten von mittels eines Coriolis-Massendurchfluß-Meßgeräts gemäß Fig. 1 bzw. mittels einer an einen Meßwandler vom Vibrationstyp angeschlossenen Umformerschaltung gemäß Fig. 2 generierte Schwingungsmeßsignalen;

Fig. 4a, 4b  schematisch einen Schwingungssensor in einer geschnittenen Seitenansicht sowie Feldlinien eines den Schwingungssensor durchdringenden Magnetfelds, und

Fig. 5a, 5b  schematisch einen weiteren Schwingungssensor in einer geschnittenen Seitenansicht sowie Feldlinien eines nämlichen Schwingungssensor durchdringenden Magnetfelds;

Fig. 6a  exemplarisch ein Amplitudenspektrum für ein mittels eines Schwingungssensors gemäß Fig. 4a oder 5a generiertes Schwingungsmeßsignal; und

Fig. 6b  exemplarisch ein Amplitudenspektrum für ein mittels eines Schwingungssensors gemäß Fig. 4b oder 5b generiertes Schwingungsmeßsignal.

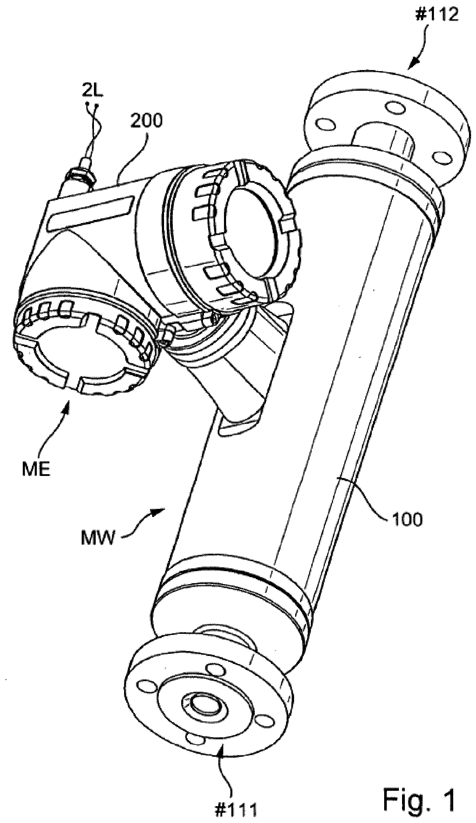

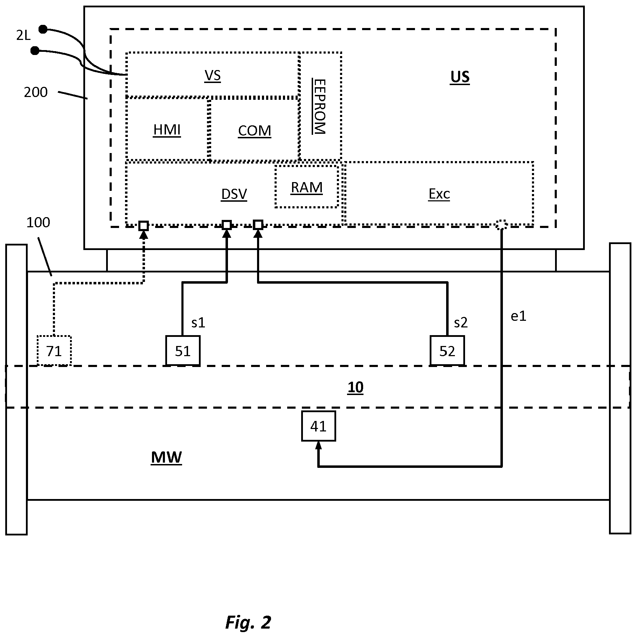

In der Fig. 1 bzw. 2 ist ein in eine (hier nicht dargestellte) Prozeßleitung - wie z.B. eine Rohrleitung einer industriellen Anlage, beispielsweise einer Abfüllanlagen oder einer Betankungsvorrichtung - einfügbares Coriolis-Massendurchfluß-Meßgerät für fließfähige, insb. fluide bzw. schüttfähige, Medien, beispielsweise nämlich auch eines zumindest zeitweise 2- oder mehrphasigen bzw. inhomogenen Meßstoffs, dargestellt. Das Coriolis-Massendurchfluß-Meßgerät dient im besonderen dem Messen und/oder Überwachen einer Massenstrom m bzw. dem Ermitteln von die Massenstrom repräsentierenden Massenstrom-Meßwerten eines in der vorbezeichneten Prozeßleitung geführten bzw. darin zumindest zeitweise strömen gelassenen fluiden Meßstoffs, beispielsweise nämlich eines Gases, einer Flüssigkeit oder einer Dispersion, insb. nämlich die Massenstrom-Meßwerte auszugeben. Ferner kann das Coriolis-Massendurchfluß-Meßgerät dazu dienen, zusätzlich auch eine Dichte $\rho$ und/oder eine Viskosität $\eta$, des Meßstoffs zu messen, beispielsweise nämlich die Dichte repräsentierende Dichte-Meßwerte und/oder die Viskosität repräsentierende Viskositäts-Meßwerte zu ermitteln und auszugeben. Nach einer Ausgestaltung der Erfindung ist vorgesehen, das Coriolis-Massendurchfluß-Meßgerät zum Ermitteln von Massendurchfluß-Meßwerten eines zu transferierenden, beispielsweise nämlich mit einer vorgegebenen bzw. vorgebbaren Menge von einem Lieferanten an einen Abnehmer zu übergebenden Meßstoffs zu verwenden, beispielsweise ein verflüssigtes Gas, wie z.B. ein Methan und/oder Ethan und/oder Propan und/oder Buthan enthaltendes Flüssiggas bzw. ein verflüssigtes Erdgas (LNG) oder auch ein mittels flüssiger Kohlenwasserstoffe gebildetes Stoffgemisch, beispielsweise nämlich ein Erdöl oder ein flüssiger Kraftstoff. Das Coriolis-Massendurchfluß-Meßgerät kann dementsprechend beispielsweise auch als Bestandteil einer Übergabestelle für eichpflichtigen Güterverkehr, wie etwa einer Betankungsanlage, und/oder als ein Bestandteil einer Übergabestelle, beispielsweise auch nach Art der in der erwähnten der WO-A 02/060805, der WO-A 2008/013545, der WO-A 2010/099276, der WO-A 2014/151829, der WO-A 2016/058745 gezeigten Übergabestellen, ausgebildet sein.

Das - beispielsweise auch als zusätzlich die Dichte messendes Coriolis-Massendurchfluß-/Dichte-Meßgerät und/oder als zusätzlich die Viskosität messendes Coriolis-Massendurchfluß-/Viskosität-Meßgerät realisierte - Coriolis-Massendurchfluß-Meßgerät umfaßt einen über ein Einlaßende #111 sowie ein Auslaßende #112 an die Prozeßleitung angeschlossenen physikalisch-elektrischen Meßaufnehmer MW, der dafür eingerichtet ist, im Betrieb vom Meßstoff durchströmt zu werden, sowie eine damit elektrisch gekoppelte - insb. mittels wenigstens eines Mikroprozessors gebildete und/oder im Betrieb mittels interner Energiespeicher und/oder von extern via Anschlußkabel mit elektrischer Energie versorgte - elektronische Umformerschaltung US. Das elektrische Koppeln bzw. Anschließen des Meßaufnehmers MW an die Umformerschaltung US kann mittels entsprechender elektrischer Anschlußleitungen und entsprechender Kabeldurchführungen erfolgen. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein.

In vorteilhafter Weise kann die, beispielsweise auch programmierbare und/oder fernparametrierbare, Umformerschaltung US ferner so ausgelegt sein, daß sie im Betrieb des Coriolis-Massendurchfluß-Meßgeräts mit einem diesem übergeordneten (hier nicht dargestellten) elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten, beispielsweise auch Statusmeldungen, austauschen kann, wie etwa aktuelle Meßwerte oder der Steuerung des Meßsystems dienende Einstell- und/oder Diagnosewerte. Dementsprechend kann die Umformerschaltung US beispielsweise eine solche Sende- und Empfangselektronik COM aufweisen, die im Betrieb von einer im vorbezeichneten Datenverarbeitungssystem vorgesehen, vom Meßsystem entfernten (zentrale) Auswerte- und Versorgungseinheit gespeist wird. Beispielsweise kann die Umformerschaltung US (bzw. deren vorbezeichnete Sende- und Empfangselektronik COM) so ausgebildet sein, daß sie über eine, ggf. auch als 4-20 mA-Stromschleife konfigurierte Zweileiter-Verbindung 2L mit dem vorbezeichneten externen elektronischen Datenverarbeitungssystem elektrisch verbindbar ist und darüber sowohl die für den Betrieb des Coriolis-Massendurchfluß-Meßgeräts erforderliche elektrische Leistung von der vorbezeichneten Auswerte- und Versorgungseinheit des Datenverarbeitungssystems beziehen als auch Meßwerte zum Datenverarbeitungssystem übermitteln kann, beispielsweise durch (Last-)Modulation eines von der Auswerte- und Versorgungseinheit gespeisten Versorgungsgleichstroms Versorgungsgleichstromes. Zudem kann die Umformerschaltung US auch so ausgebildet sein, daß sie nominell mit einer maximalen Leistung von 1 W oder weniger betrieben werden kann und/oder eigensicher ist. Die Umformerschaltung US des erfindungsgemäßen Coriolis-Massendurchfluß-Meßgeräts kann zudem beispielsweise auch modular aufgebaut sein, derart, daß diverse Elektronik-Komponenten der Umformerschaltung US, wie etwa eine Antriebselektronik Exc zum Ansteuern des Meßaufnehmers, eine Meß- und Steuerelektronik DSV zum Verarbeiten von vom Meßaufnehmer bereitgestellten Meßsignalen und zum Ermitteln von Meßwerten anhand von Meßsignalen des Meßaufnehmers, eine interne Energieversorgungsschaltung VS zum Bereitstellen einer oder mehrerer interner Betriebsspannungen und/oder die vorbezeichnete, der Kommunikation mit einem übergeordneten Meßdatenverarbeitungssystem bzw. einem externen Feldbus dienliche Sende- und Empfangselektronik COM, jeweils auf einer eigenen Leiterplatte angeordnet und/oder jeweils mittels eines eigenen Mikroprozessores gebildet sind. Zum Visualisieren von Meßgerät intern erzeugten Meßwerten und/oder Meßgerät intern generierten Statusmeldungen, wie etwa eine Fehlermeldung oder einen Alarm, vor Ort kann das Coriolis-Massendurchfluß-Meßgerät desweiteren ein, zumindest zeitweise auch mit der Umformerschaltung US, beispielsweise nämlich deren vorbezeichneten Meß- und Steuerelektronik DSV, kommunizierendes Anzeige- und Bedienelement HMI aufweisen, wie etwa ein in vorbezeichnetem Elektronik-Gehäuse 200 hinter einem darin entsprechend vorgesehenen Fenster plaziertes LCD-, OLED- oder TFT-Display sowie eine entsprechende Eingabetastatur und/oder ein Touchscreen. Desweiteren kann die Umformerschaltung US - wie auch aus einer Zusammenschau der der Fig. 1 und 2 ohne weiteres ersichtlich - ferner beispielsweise in einem entsprechenden, insb. schlag- und/oder auch explosionsfest und/oder hermetisch dicht ausgebildeten, eigenen Elektronik-Gehäuse 200 untergebracht sein.

Bei dem Meßaufnehmer MW handelt es sich um einen Meßaufnehmer vom Vibrationstyp, nämlich einen Meßaufnehmer mit wenigstens einem Vibrationselement 10, mit einer Erregeranordnung 41 und mit einer Sensoranordnung 51, 52, wobei sowohl die Erregeranordnung 41 als auch die Sensoranordnung mit der Umformerschaltung US elektrisch gekoppelt sind und wobei das wenigstens eine Vibrationselement 10 eingerichtet ist, von strömendem Meßstoff kontaktiert, beispielsweise nämlich von Meßstoff durchströmt und/oder umströmt, zu werden und währenddessen vibrieren gelassen zu werden, beispielsweise nämlich mit wenigstens einer dem Vibrationselement bzw. dem damit gebildeten Meßaufnehmer innewohnenden Resonanzfrequenz. Die Erregeranordnung 41 des Meßaufnehmers MW wiederum ist dafür eingerichtet, dorthin eingespeiste elektrische Leistung in erzwungene mechanische Schwingungen des wenigstens einen Vibrationselements 10 bewirkende mechanische Leistung zu wandeln. Bei dem Meßaufnehmer kann es sich dementsprechend beispielsweise auch um einen konventionellen - beispielsweise nämlich auch aus den eingangs erwähnten EP-A 816 807, US-A 2002/0033043, US-A 2006/0096390, US-A 2007/0062309, US-A 2007/0119264, US-A 2008/0011101, US-A 2008/0047362, US-A 2008/0190195, US-A 2008/0250871, US-A 2010/0005887, US-A 2010/0011882, US-A 2010/0257943, US-A 2011/0161017, US-A 2011/0178738, US-A 2011/0219872, US-A 2011/0265580, US-A 2011/0271756, US-A 2012/0123705, US-A 2013/0042700, US-A 2016/0313162, US-A 2017/0261474, US-A 44 91 009, US-A 47 56 198, US-A 47 77 833, US-A 48 01 897, US-A 48 76 898, US-A 49 96 871, US-A 50 09 109, US-A 52 87 754, US-A 52 91 792, US-A 53 49 872, US-A 57 05 754, US-A 57 96 010, US-A 57 96 011, US-A 58 04 742, US-A 58 31 178, US-A 59 45 609, US-A 59 65 824, US-A 60 06 609, US-A 60 92 429, US-B 62 23 605, US-B 63 11 136, US-B 64 77 901, US-B 65 05 518, US-B 65 13 393, US-B 66 51 513, US-B 66 66 098, US-B 67 11 958, US-B 68 40 109, US-B 69 20 798, US-B 70 17 424, US-B 70 40 181, US-B 70 77 014, US-B 72 00 503, US-B 72 16 549, US-B 72 96 484, US-B 73 25 462, US-B 73 60 451, US-B 77 92 646, US-B 79 54 388, US-B 83 33 120, US-B 86 95 436, WO-A 00/19175, WO-A 00/34748, WO-A 01/02816, WO-A 01/71291, WO-A 02/060805, WO-A 2005/093381, WO-A 2007/043996, WO-A 2008/013545, WO-A 2008/059262, WO-A 2010/099276, WO-A 2013/092104, WO-A 2014/151829, WO-A 2016/058745, WO-A 2017/069749, WO-A 2017/123214, WO-A 2017/143579, WO-A 85/05677, WO-A 88/02853, WO-A 89/00679, WO-A 94/21999, WO-A 95/03528, WO-A 95/16897, WO-A 95/29385, WO-A 98/02725, WO-A 99/40 394 oder PCT/EP2017/067826 bekannten - Meßaufnehmer vom Vibrationstyp handeln.

Das Vibrationselement 10 kann - wie bei Meßaufnehmern der in Rede stehenden Art bzw. damit gebildeten Coriolis-Massendurchfluß-Meßgeräten üblich - beispielsweise mittels eines oder mehreren, insb. zumindest abschnittsweise geraden und/oder zumindest abschnittsweise kreisbogenförmigen, Rohren mit einem von einer, insb. metallischen, Rohrwand und einem davon umhüllten Lumen gebildet sein, wobei das Rohr bzw. jedes der Rohre zudem jeweils dafür eingerichtet ist, den zumindest zeitweise strömenden fluiden Meßstoff zu führen (bzw. von nämlichem Meßstoff durchströmt zu werden) und währenddessen entsprechend vibrieren gelassen zu werden. Das Vibrationselement kann beispielsweise aber auch mittels eines oder mehreren innerhalb eines Lumens eines vom Meßstoff durchströmten Rohrs des Meßaufnehmers plazierten Verdrängerelementen gebildet sein, wobei das Verdrängerelement bzw. jedes der Verdrängerelemente jeweils dafür eingerichtet ist, von Meßstoff umströmt und währenddessen entsprechend vibrieren gelassen zu werden. Das wenigstens eine Vibrationselement 10 kann ferner - wie auch in Fig. 2 angedeutet bzw. aus einer Zusammenschau der Fig. 1 und 2 ohne weiteres ersichtlich - zusammen mit der Erregeranordnung 41 und der Sensoranordnung sowie ggf. weiteren Komponenten des Meßaufnehmers innerhalb eines Aufnehmer-Gehäuses 100 untergebracht sein. Zudem kann beispielsweise das vorbezeichnete Elektronik-Gehäuse 200 - wie auch in Fig. 1 bzw. 2 dargestellt - unter Bildung eines Coriolis-Massendurchfluß-Meßgeräts in Kompaktbauweise an nämliches Aufnehmer-Gehäuse 100 montiert sein.

Nach einer weiteren Ausgestaltung der Erfindung ist die Erregeranordnung, wie bei Meßaufnehmern vom Vibrationstyp durchaus üblich, mittels wenigstens eines elektro-mechanischen - beispielsweise nämliche einem elektrodynamischen, elektromagnetischen oder piezoelektrischen - Schwingungserregers 41 gebildet, der - wie auch in Fig. 2 angedeutet - beispielsweise so positioniert sein kann, daß eine damit generierte Kraft in Richtung einer durch einen Massenschwerpunkt des wenigstens einen Vibrationselements verlaufenden gedachten Kraftwirkungslinie auf das Vibrationselement wirkt, und/oder der - wie auch in Fig. 2 dargestellt - beispielsweise auch der einzige Schwingungen des Vibrationselements 10 bewirkende Schwingungserreger der Erregeranordnung bzw. des damit gebildeten Meßaufnehmers sein kann.

Die Umformerschaltung US des erfindungsgemäßen Coriolis-Massendurchfluß-Meßgeräts ist zudem u.a. dafür vorgesehen und entsprechend eingerichtet, ein - beispielsweise bipolares und/oder zumindest zeitweise periodisches, ggf. auch harmonisches - elektrisches Treibersignal e1 zu generieren und damit elektrische Leistung in die Erregeranordnung des Meßaufnehmers MW einzuspeisen, derart, daß das wenigstens eine Vibrationselement 10 zumindest anteilig Nutzschwingungen, nämlich erzwungene mechanische Schwingungen mit einer Nutzfrequenz $f_N$ ausführt, die geeignet sind, im strömendem Meßstoff vom Massenstrom abhängige, gleichwohl auf das Vibrationselement 10 zurückwirkende Corioliskräfte zu erzeugen, derart, daß den vorbezeichneten Nutzschwingungen Coriolisschwingungen, nämlich durch die Corioliskräfte zusätzlich erzwungene, vom Massenstrom m des Meßstoffs abhängige mechanische Schwingungen mit der Nutzfrequenz $f_N$ überlagert sind. Bei der Nutzfrequenz $f_N$ handelt es sich um eine durch das elektrische Treibersignal e1 vorgegebenen, beispielsweise der vorbezeichneten Resonanzfrequenz $f_R$ des Meßaufnehmers entsprechenden, Schwingungsfrequenz der erzwungenen mechanischen Schwingungen des Vibrationselements ($f_N = f_R$). Das Treibersignal e1 kann dementsprechend beispielsweise ein die vorbezeichnete, die Nutzfrequenz $f_N$ bestimmende Signalkomponente $e1_N$ bildendes harmonisches elektrisches Signal oder beispielsweise auch ein sich aus mehreren (spektrale) Signalkomponenten zusammensetzendes, gleichwohl eine die Nutzfrequenz $f_N$ bestimmende spektrale Nutzkomponente $e1_N$ enthaltendes, mehrfrequentes elektrisches Signal sein. Bei den mittels Erregeranordnung 41 und daran angeschlossener Umformerschaltung US angeregten Nutzschwingungen kann es ferner, wie bei Coriolis-Massendurchfluß-Meßgeräten durchaus üblich, beispielsweise um Biegeschwingungen des wenigstens einen Vibrationselements 10 um ein zugehörige Ruhelage handeln, wobei als Nutzfrequenz $f_N$ beispielsweise eine auch von der Dichte und/oder der Viskosität des im Meßaufnehmer geführten bzw. dessen Vibrationselement 10 kontaktierenden Meßstoffs abhängige momentane Resonanzfrequenz eines lediglich einen einzigen Schwingungsbauch aufweisenden Biegeschwingungsgrundmodes des wenigstens einen Vibrationselements 10 und/oder eine niedrigste momentane Resonanzfrequenz des wenigstens einen Vibrationselements 10 ausgewählt, nämlich mittels des Treibersignals e1 eingestellt sein kann. Zum Erzeugen des Treibersignals e1 bzw. zum Einstellen der Nutzfrequenz $f_N$ kann die Umformerschaltung US, wie bei Coriolis-Massendurchfluß-Meßgeräten durchaus üblich, beispielsweise eine entsprechende, insb. mittels einer oder mehreren dem Ermitteln und Einstellen der Nutzfrequenz $f_N$ dienlichen Phasenregelschleifen (*PLL - phase locked loop*) gebildete, Antriebselektronik Exc aufweisen. Nach einer weiteren Ausgestaltung der Erfindung weist die Antriebselektronik Exc einen digitalen Frequenzausgang auf. Zudem ist die Antriebselektronik Exc ferner auch dafür eingerichtet, an nämlichem Frequenzausgang eine Frequenzfolge, nämlich eine Folge von die für das Treibersignal e1 eingestellte Signalfrequenz, beispielsweise nämlich die momentan eingestellte Nutzfrequenz (bzw. die Signalfrequenz von dessen Signalkomponente $e_{N1}$), quantifizierenden digitalen Frequenzwerten auszugeben.

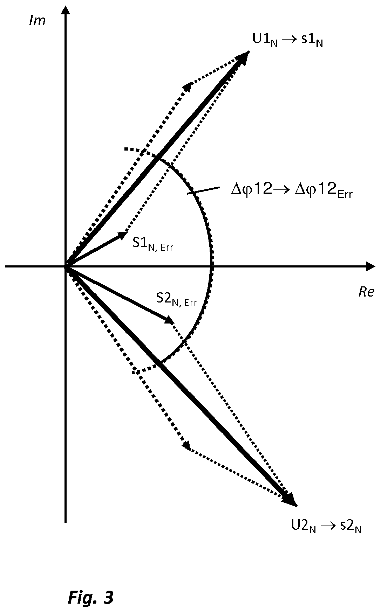

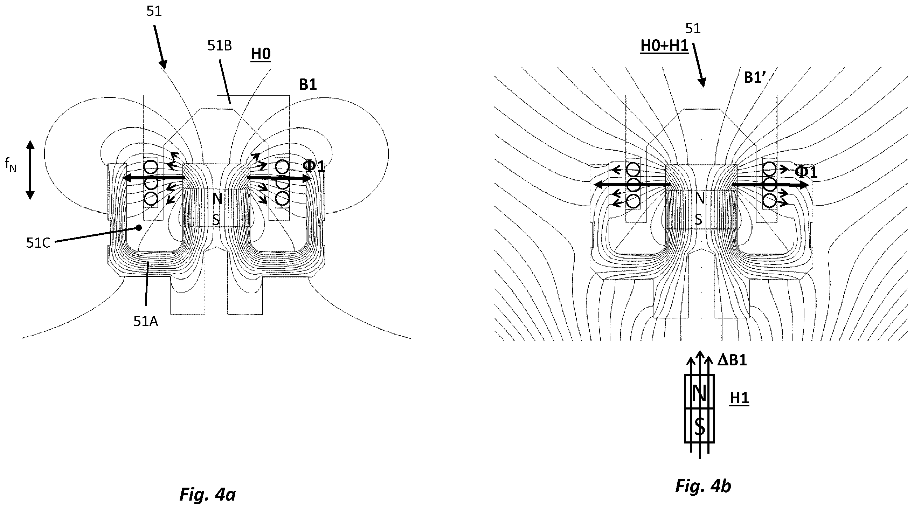

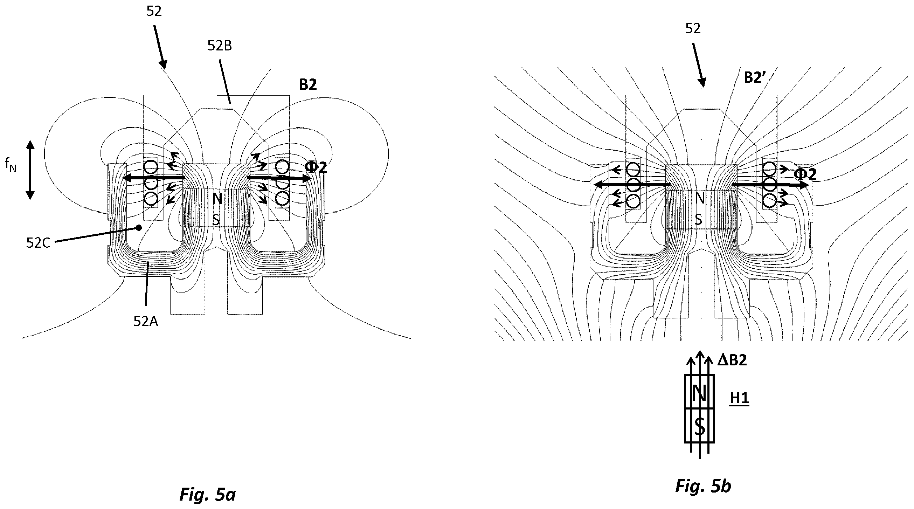

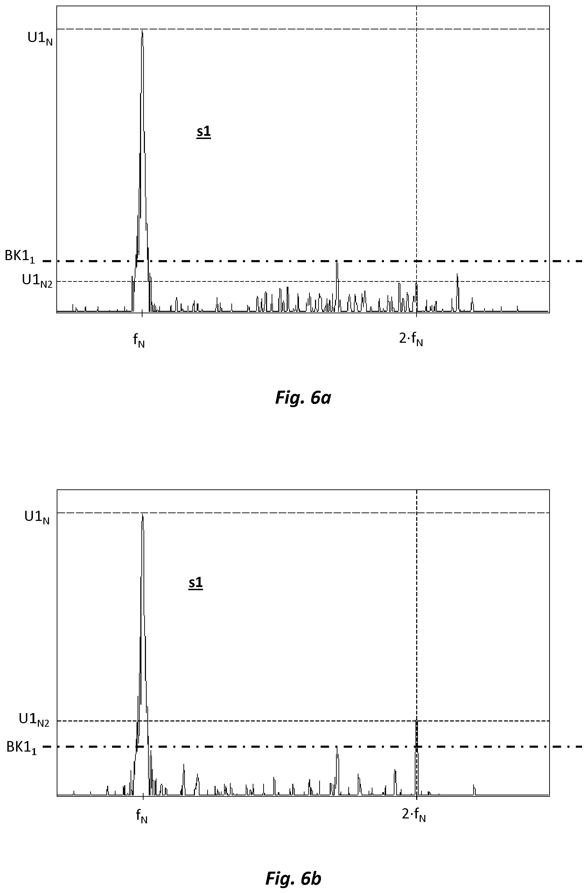

Die Sensoranordnung des Meßaufnehmers wiederum ist dafür eingerichtet, mechanische Schwingungen des wenigstens einen Vibrationselements 10, nicht zuletzt auch erzwungene mechanische Schwingungen des wenigstens einen Vibrationselements 10, zu erfassen und jeweils zumindest anteilig Schwingungsbewegungen des wenigstens einen Vibrationselements 10 repräsentierende Schwingungsmeßsignale (s1, s2) bereitzustellen. Zum Erfassen mechanischer Schwingungen des wenigstens einen Vibrationselements weist die Sensoranordnung des erfindungsgemäßen Coriolis-Massendurchfluß-Meßgeräts einen, beispielsweise mittels einer ersten Tauchspule gebildeten, elektrodynamischen ersten Schwingungssensor 51 und wenigstens einen, beispielsweise mittels einer zweiten Tauchspule gebildeten und/oder zum ersten Schwingungssensor 51 baugleichen, elektrodynamischen zweiten Schwingungssensor 52 auf. Im besonderen ist der Schwingungssensor 51 dafür eingerichtet, Schwingungsbewegungen des wenigstens einen Vibrationselements 10 an einem ersten Meßpunkt in ein elektrisches erstes Schwingungsmeßsignal s1 der Sensoranordnung zu wandeln, derart, daß - wie in Fig. 3 anhand eines Phasor-Diagramms bzw. in Fig. 6a oder 6b jeweils anhand eines Amplitudenspektrums dargestellt - nämliches Schwingungsmeßsignal s1 wenigstens eine (von der Zeit t abhängige) erste Nutzkomponente $s1_N$, nämlich eine Wechselspannungskomponente mit einer der Nutzfrequenz $f_N$ entsprechenden Frequenz aufweist, und ist der Schwingungssensor 52 dafür eingerichtet, Schwingungsbewegungen des wenigstens einen Vibrationselements an einem vom ersten Meßpunkt entfernten zweiten Meßpunkt in ein elektrisches zweites Schwingungsmeßsignal s2 der Sensoranordnung zu wandeln, derart, daß - wie auch in Fig. 3 angedeutet - nämliches Schwingungsmeßsignal s2 wenigstens eine (von der Zeit t abhängige) zweite Nutzkomponente $s2_N$, nämlich eine Wechselspannungskomponente mit einer der Nutzfrequenz $f_N$ entsprechenden Frequenz aufweist. Indem es sich bei jedem der beiden Schwingungssensoren 51, 52 jeweils um einen elektrodynamischen Schwingungssensor handelt, weisen dementsprechend die Nutzkomponente $s1_N$ eine von der Nutzfrequenz $f_N$ sowie von einem - in Fig. 4a bzw. 4b schematisch gezeigten - ersten magnetischen Fluß $\Phi1$, nämlich einem magnetischen Fluß durch den Schwingungssensor 51 abhängige Amplitude $U1_{N1}$ (bzw. abhhängigen Spannungspegel) und die Nutzkomponente $s2_N$ eine von der Nutzfrequenz $f_N$ sowie von einem - in Fig. 5a bzw. 5b schematisch gezeigten - zweiten magnetischen Fluß $\Phi2$, nämlich einem magnetischen Fluß durch den Schwingungssensor 52 abhängige Amplitude $U2_{N1}$ (bzw. abhängigen Spannungspegel) auf. Aufgrund dessen, daß ein den vorbezeichneten magnetischen Flüssen $\Phi1$ bzw. $\Phi2$ entsprechendes inneres, nämlich innerhalb des jeweiligen Schwingungssensors bzw. des dami gebildeten Meßaufnehmers bei dessen Kalibrierung bzw. bei der Kalibrierung des damit gebildeten Coriolis-Massendurchfluß-Meßgeräts etabliertes Magnetfeld H0 naturgemäß von einer idealen homogenen Verteilung abweicht und damit einhergehend regelmäßig auch innerhalb der Schwingungssensoren keine ortsinvariante bzw. keine konstante magnetische Flußdichte (B1, B2) aufweist, enthalten die Schwingungssignale s1, s2 zusätzlich zur jeweiligen Nutzkomponente jeweils auch entsprechende Oberschwingungskomponenten, nämlich eine oder mehrere verschiedene Wechselspannungskomponenten mit jeweils einer einem ganzzahligen Vielfachen der Nutzfrequenz gleichwohl nicht einer anderen, ggf. ebenfalls angeregten, Resonanzfrequenz des Meßaufnehmers entsprechenden Frequenz, deren jeweilige Amplitude ebenfalls vom jeweiligen magnetischen Fluß ($\Phi1$, $\Phi2$) abhängig ist. Dementsprechend weist das Schwingungsmeßsignal s1 zusätzlich wenigstens eine erste Oberschwingungskomponente $s1_{N2}$, nämlich eine Wechselspannungskomponente mit einer einem ganzzahligen Vielfachen, beispielsweise nämlich einem Doppelten, der Nutzfrequenz entsprechenden Frequenz, und - wie auch in Fig. 6a oder 6b jeweils angedeutet bzw. aus deren Zusammenschau ohne weiteres ersichtlich - mit einer vom magnetischen Fluß $\Phi1$ abhängigen Amplitude $U1_{N2}$ auf und weist das Schwingungsmeßsignal s2 auch wenigstens eine zweite Oberschwingungskomponente $s2_{N2}$, nämlich eine Wechselspannungskomponente mit einer einem ganzzahligen Vielfachen, beispielsweise nämlich einem Doppelten, der Nutzfrequenz entsprechenden Frequenz, und mit einer vom magnetischen Fluß $\Phi2$ abhängigen Amplitude $U2_{N2}$ auf, obwohl das Vibrationselement 10 keine mechanischen Schwingungen mit einer dementsprechenden Frequenz und Amplitude ausführt.

Jeder der beiden Schwingungssensoren kann - wie auch in Fig. 4a und 4b bzw. 5a und 5b jeweils angedeutet und wie bei Meßaufnehmern der in Rede stehenden Art durchaus üblich - beispielsweise jeweils mittels einer Tauchspule gebildet sein. Dementsprechend ist nach einer weiteren Ausgestaltung der Erfindung vorgesehen, daß der Schwingungssensor 51 einen, beispielsweise nämlich unter Bildung des ersten Meßpunkts mechanisch mit dem wenigstens einen Vibrationselement verbundenen, ersten Permanentmagneten 51A sowie eine, beispielsweise mechanisch mit dem wenigstens einen Vibrationselement 10 und/oder mit dem vorbezeichneten Aufnehmer-Gehäuse verbundene, erste Luftspule 51B aufweist und daß der Schwingungssensor 52 einen, beispielsweise nämlich unter Bildung des zweiten Meßpunkts mechanisch mit dem wenigstens einen Vibrationselement verbundenen, zweiten Permanentmagneten 52A sowie eine, beispielsweise mechanisch mit dem wenigstens einen Vibrationselement und/oder mit dem vorbezeichneten Aufnehmer-Gehäuse verbundene, zweite Luftspule 52B aufweist. Der erste Permanentmagnet 51A bildet einen den magnetischen Fluß Φ1 führenden ersten Luftspalt 51C innerhalb dem die erste Luftspule 51B zumindest teilweise positioniert ist und der zweite 52A Permanentmagnet bildet einen den magnetischen Fluß Φ2 führenden zweiten Luftspalt 52C innerhalb dem die zweite Luftspule 52B zumindest teilweise positioniert ist. Ferner sind der erste Permanentmagnet und die erste Luftspule eingerichtet, durch Schwingungsbewegungen der Nutzschwingungen des wenigstens einen Vibrationselements relativ zueinander bewegt zu werden und eine mit den Nutzschwingungen korrespondierende, mithin zumindest eine Teilspannung des Schwingungsmesignals s1 bildende erste Induktionsspannung $u_{i1}$ ($u_{i1} \rightarrow$ s1) zu generieren, und sind der zweite Permanentmagnet und die zweite Luftspule eingerichtet, durch Schwingungsbewegungen des wenigstens einen Vibrationselements relativ zueinander bewegt zu werden und eine mit den Nutzschwingungen korrespondierende, mithin zumindest eine Teilspannung des Schwingungsmesignals s2 bildende zweite Induktionsspannung $u_{i2}$ ($u_{i2} \rightarrow$ s2) zu generieren, wobei die vorbezeichneten ersten und zweiten Induktionsspannungen entsprechend dem Induktionsgesetzt (für Bewegungsinduktion) jeweils von einem jeweiligen Verkettungs- bzw. Induktionsfluß ($\Psi1 = N1 \cdot \Phi1$ bzw. $\Psi2 = N2 \cdot \Phi2$), nämlich einem gesamtem magnetischen Fluß innerhalb der jeweiligen ersten bzw. zweiten Luftspule, mithin vom jeweiligen magnetischen Fluß Φ1 bzw. Φ2 und einer jeweils zugehörigen Windungszahl (N1 bzw. N2) abhängig sind und zudem jeweils auch die vorbezeichneten Oberschwingungskomponenten (j>1) enthalten, insb. nämlich eine der Bedingungen:

$$u_{i1} = \sum_{j=1}^{M} U1_{Nj} = \frac{d\Psi1}{dt} = N1 \cdot \frac{d\Phi1}{dt} \sim \sum_{j=1}^{M} N1 \cdot \Phi1 \cdot 2\pi \cdot j \cdot f_N \cdot \cos\left(2\pi \cdot j \cdot f_N \cdot t\right) \rightarrow s1 \qquad (1)$$

bzw.

$$u_{i2} = \sum_{j=1}^{M} U2_{Nj} = \frac{d\Psi2}{dt} = N2 \cdot \frac{d\Phi2}{dt} \sim \sum_{j=1}^{M} N2 \cdot \Phi2 \cdot 2\pi \cdot j \cdot f_N \cdot \cos\left(2\pi \cdot j \cdot f_N \cdot t\right) \rightarrow s2 \qquad (2)$$

erfüllen.

Die vom Meßaufnehmer MW generierten Schwingungssmeßsignale s1, s2 sind im weiteren Verlauf der Umformerschaltung US, beispielsweise via elektrischer Verbindungsleitungen, zugeführt um dort, beispielsweise mittels digitaler Signalverarbeitung (DSV), entsprechend verarbeitet, beispielsweise nämlich vorverstärkt, gefiltert und digitalisiert und hernach entsprechend ausgewertet zu werden.

Die Schwingungssensoren 51, 52 sind nach einer weiteren Ausgestaltung der Erfindung zudem so angeordnet, daß im Falle einer Anregung der vorbezeichneten Coriolisschwingungen des wenigstens einen Vibrationselements 10 jede der Nutzkomponenten $s1_N$, $s2_N$ der Schwingungsmeßsignale s1 bzw. s2 zudem jeweils auch einen vom Massenstrom m des durch den Meßaufnehmer MW strömenden Meßstoff abhängigen, beispielsweise relativ zum Treibersignal e1 bzw. dessen Nutzkomponente $e1_N$ meßbaren, Phasenwinkel aufweist; dies im besonderen in der Weise, daß, wie auch in Fig. 3 angedeutet, zwischen der Nutzkomponente $s1_N$ des Schwingungssignals s1 und der Nutzkomponente $s2_N$ des Schwingungssignals s2 eine von nämlicher Massenstrom m abhängige Phasendifferenz Δφ12 (Δφ12= f(m)), nämlich eine Differenz zwischen dem Phasenwinkel der ersten Nutzkomponente $s1_N$ und dem Phasenwinkel der zweiten Nutzkomponent $s2_N$ existiert bzw. daß die Schwingungsmeßsignale s1, s2 einer Änderung des Massenstroms des im Meßwandler geführten Meßstoffs mit einer Änderung nämlicher Phasendifferenz Δφ12 (Δφ12*) folgen. Die Schwingungssensoren 51, 52 können, wie derartigen Meßaufnehmern durchaus üblich bzw. auch in Fig. 2 angedeutet, dementsprechend beispielsweise jeweils im gleichen Abstand zu einem Massenschwerpunkt des wenigstens einen Vibrationselements 10, beispielsweise also zum Massenschwerpunkt des wenigstens einen Rohrs bzw. zum Massenschwerpunkt des wenigstens einen Verdrängerelements, positioniert sein, derart, daß in Strömungsrichtung gesehen der Schwingungssensors 51 einlaßseitig am wenigstens einen Vibrationselement 10 bzw. in dessen Nähe und der Schwingungssensor 52 auslaßseitig am wenigstens einen Vibrationselement 10 bzw. in dessen Nähe angeordnet sind. Zudem können die beiden Schwingungssensoren 51, 52 auch die einzigen dem Erfassen von Schwingungen des wenigstens einen Vibrationselement 10 dienlichen Schwingungssensoren sein, derart, daß die Sensoranordnung außer nämlichen Schwingungssensoren 51, 52 keinen weiteren Schwingungssensor aufweist. Nach einer weiteren Ausgestaltung der Erfindung ist ferner vorgesehen, daß die Sensoranordnung zum Erfassen einer Temperatur des Meßaufnehmers an einem Temperatur-Meßpunkt wenigstens einen Temperatursensor 61 aufweist, der eingerichtet ist, ein Temperaturmeßsignal, nämlich ein die Temperatur am Temperatur-Meßpunkt repräsentierendes Meßsignal, insb. mit einer von der Temperatur abhängigen elektrischen Spannung und/oder einem von der Temperatur abhängigen elektrischen Strom, bereitzustellen. Alternativ oder in Ergänzung kann die Sensoranordnung beispielsweise auch wenigstens einen dem Erfassen von mechanischen Spannungen innerhalb der Meßaufnehmers dienlichen Dehnungssensor aufweisen.

Die Umformerschaltung US ist, wie bereits erwähnt, außer für die Erzeugung des Treibersignals e1 ferner auch dafür vorgesehen bzw. eingerichtet, die Schwingungsmeßsignale s1, s2 zu empfangen und auszuwerten, nämlich anhand der Schwingungsmeßsignale s1, s2, beispielsweise nämlich anhand der vorbezeichneten Phasendifferenz $\Delta\varphi12$ zwischen den ersten und zweiten Nutzkomponenten, den Massenstrom repräsentierende Massenstrom-Meßwerte, beispielsweise mit einer Meßwerte-Aktualisierungsrate von nicht weniger als 1 s⁻¹ ( = 1 Meßwert pro Sekunde), zu ermitteln, beispielsweise nämlich mit auch in Form von Analogwerten und/oder in Form von Digitalwerten auszugeben.

Nach einer weiteren Ausgestaltung der Erfindung ist die Umformerschaltung US dementsprechend ferner dafür eingerichtet, anhand der Schwingungsmeßsignale s1, s2 zunächst die Phasendifferenz $\Delta\varphi12$ zu ermitteln. Zudem kann die Umformerschaltung US auch eingerichtet sein, von wenigstens einem der anliegenden Schwingungsmeßsignale s1, s2 den jeweiligen vorbezeichnete Phasenwinkel von dessen jeweiliger Nutzkomponente $s1_N$, $s2_N$, beispielsweise relativ zum Treibersignal e1 bzw. dessen vorbezeichneter Nutzkomponente $e1_N$, zu ermitteln und/oder anhand wenigstens eines der Schwingungsmeßsignale s1, s2 die Nutzfrequenz $f_N$ zu ermitteln, beispielsweise auch im Betrieb zumindest eine Phasenfolge, nämlich eine Sequenz von den Phasenwinkel einer der ersten und zweiten Nutzkomponenten entsprechend quantifizierenden digitalen Phasenwerten und/oder eine Frequenzfolge, nämlich eine Sequenz von die Nutzfrequenz $f_N$ quantifizierenden digitalen Frequenzwerten zu generieren, derart, daß die Phasenfolge einem zeitlichen Verlauf des Phasenwinkel der entsprechenden Nutzkomponente bzw. die Frequenzfolge einem zeitlichen Verlauf der Nutzfrequenz entspricht. Die Ermittlung der Phasenwinkel bzw. die Generierung der vorbezeichneten Phasenfolge kann beispielsweise, wie bei Coriolis-Massendurchfluß-Meßgeräten durchaus üblich, mittels einer in der Umformerschaltung US durchgeführten Quadraturdemodulation (Q/I-Demodulation) des jeweiligen Schwingungsmeßsignals mit einem die Nutzfrequenz aufweisenden ersten harmonischen Referenzsignal (Q) und einem dazu um 90° phasenverschobenen zweiten harmonischen Referenzsignal (I) realisiert sein. Nicht zuletzt für den erwähnten Fall, daß die mittels Treibersignals e1 bewirkten Nutzschwingungen Resonanzschwingungen des wenigstens einen Vibrationselements 10 sind, kann die Nutzfrequenz $f_N$ der Schwingungsmeßsignale s1, s2 als Maß für die Dichte und/oder die Viskosität des Meßstoffs dienen und kann dementsprechend mittels der Umformerschaltung US die Dichte und/oder die Viskosität basierend auf der vorbezeichneten Frequenzfolge ermittelt werden. Nicht zuletzt für den vorbezeichneten Fall, daß die Sensoranordnung einen Temperatursensor 61 und/oder einen Dehnungssensor aufweist, ist die Umformerschaltung US nach einer weiteren Ausgestaltung der Erfindung ferner auch dafür eingerichtet, das vom Temperatursensor generierte Temperaturmeßsignal bzw. das vom Dehnungssensor generierte Dehnungsmeßsignal zu empfangen und zu verarbeiten, insb. nämlich zu digitalisieren und auszuwerten; dies beispielsweise derart, daß die Umformerschaltung US anhand des wenigstens einen Temperaturmeßsignals eine Temperatur des Verdrängerelments und/oder ein Temperatur des Meßstoffs ermittelt.

Nach einer weiteren Ausgestaltung der Erfindung ist die Umformerschaltung US ferner eingerichtet, anhand des Schwingungsmeßsignals s1 eine erste Nutzkomponentenfolge, nämlich eine Sequenz von die Amplitude $U1_{N1}$ der ersten Nutzkomponente $s1_N$ quantifizierenden digitalen Amplitudenwerten $U1_{N1}[m]$ ($m \in N$ - natürliche Zahlen) zu generieren und ist die Umformerschaltung zudem eingerichtet, anhand des Schwingungsmeßsignals s2 eine zweite Nutzkomponentenfolge, nämlich eine Sequenz von die Amplitude $U2_N$ der zweiten Nutzkomponente $s2_N$ quantifizierenden digitalen Amplitudenwerten $U2_{N1}[n]$ ($n \in N$) zu generieren, beispielsweise nämliche derart, daß die Amplitudenwerten $U1_{N1}[m]$ zu äquidistant aufeinanderfolgenden Zeitpunkten $t_m = m \cdot T_{s1}$, mithin mit einer Aktualisierungsrate $f_{s1} = 1 / (t_{m+1} - t_m) = 1 / T_{s1}$ bzw. die die Amplitudenwerten $U2_N[n]$ zu äquidistanten aufeinanderfolgenden Zeitpunkten $t_n = n \cdot T_{s2}$, mithin mit einer Aktualisierungsrate $f_{s2} = 1 / (t_n+_1 - t_n) = 1 / T_{s2}$ ermitteltet, derart daß die erste Nutzkomponentenfolge einem zeitlichen Verlauf der Amplitude $U1_N$ der ersten Nutzkomponente $s1_N$ bzw. die zweite Nutzkomponentenfolge einem zeitlichen Verlauf der Amplitude $U2_{N1}$ der zweiten Nutzkomponente $s2_N$ zumindest näherungsweise entsprechen. Die vorbezeichneten Aktualisierungsraten $f_{s1}$, $f_{s2}$ können beispielsweise so gewählt sein, daß sie gleich groß sind ($f_{s1} = f_{s2}$) und/oder daß ein Amplitudenwert $U1_{N1}[m]$ jeweils im wesentlichen zeitlich zu einem korrespondierenden Amplitudenwert $U2_{N1}[n]$ ermittelt werden ($t_m = t_n$). Darüberhinaus kann die Umformerschaltung US ferner auch eingerichtet sein, anhand des Schwingungsmeßsignals s1 eine erste Oberschwingungskomponentenfolge, nämlich eine Sequenz von die Amplitude $U1_{N2}$ der ersten Oberschwingungskomponente $s1_{N2}$ quantifizierenden digitalen Amplitudenwerten $U1_{N2}[k]$ ($k \in N$, $k > 1$) zu generieren und ist die Umformerschaltung zudem eingerichtet, anhand des Schwingungsmeßsignals s2 eine zweite Oberschwingungskomponentenfolge, nämlich eine Sequenz von die Amplitude $U2_{N2}$ der zweiten Oberschwingungskomponente $s2_{N2}$ quantifizierenden digitalen Amplitudenwerten $U2_{N2}[l]$ ($l \in N$, $l > 1$) zu generieren, beispielsweise nämliche derart, daß die Amplitudenwerten $U1_{N2}[k]$ zu äquidistant aufeinanderfolgenden Zeitpunkten $t_k = k \cdot T_{s3}$, mithin mit einer Aktualisierungsrate $f_{s3} = 1 / (t_k+_1 - t_k) = 1 / T_{s3}$ bzw. die Amplitudenwerten $U2_{N2}[l]$ zu äquidistanten aufeinanderfolgenden Zeitpunkten $t_l = l \cdot T_{s4}$, mithin mit einer Aktualisierungsrate $f_{s4} = 1 / (t_{l+1} - t_l) = 1/ T_{s4}$ ermitteltet, derart daß die erste Oberschwingungskomponentenfolge einem zeitlichen Verlauf der Amplitude der ersten Oberschwingungskomponente $s1_{N2}$ bzw. die zweite Oberschwingungskomponentenfolge einem zeitlichen Verlauf der Amplitude der zweiten Oberschwingungskomponente $s2_{N2}$ zumindest näherungsweise entsprechen. Die vorbezeichneten Aktualisierungsraten $f_{s3}$, $f_{s4}$ können beispielsweise ebenfalls so gewählt sein, daß sie jeweils gleich groß sind ($f_{s3} = f_{s4}$) und/oder daß ein Amplitudenwert $U1_{N2}[k]$ jeweils im wesentlichen zeitlich zu einem korrespondierenden Amplitudenwert $U2_{N2}[l]$ ermittelt werden ($t_k = t_k$). In Ergänzung dazu können auch Aktualisierungsraten $f_{s2}$, $f_{s2}$ $f_{s3}$, $f_{s4}$ beispielsweise auch so gewählt sein, daß sie gleich groß sind, mithin gilt $f_{s1} = f_{s2} = f_{s3} = f_{s4}$.

Die Ermittlung der Oberschwingungskomponenten $s1_N$, $s2_N$ bzw. die Generierung der vorbezeichneten ersten und zweiten Oberschwingungskomponentenfolge kann beispielsweise ebenfalls mittels Quadraturdemodulation (Q/I-Demodulation) des jeweiligen Schwingungsmeßsignals s1 bzw. s2, hier nämlich mit einem das entsprechende Vielfache, beispielsweise nämlich das Doppelte, der Nutzfrequenz aufweisenden vierten harmonischen Referenzsignal (Q2) und einem dazu um 90° phasenverschobenen vierten harmonischen Referenzsignal (I2) realisiert sein. Alternativ oder in Ergänzung können die Nutz- und/oder die Oberschwingungkomponenten bzw. deren jeweiligen Amplituden $U1_{N1}$, $U2_{N1}$, $U1_{N2}$ bzw. $U2_{N2}$ beispielsweise jeweils auch mittels einer in der Umformerschaltung US durchgeführten Fourier-Analyse der Schwingunsgmeßsignale s1, s2, beispielsweise nämlich einer auf die Schwingunsgmeßsignale s1, s2 angewendeten diskreten Fouriertransformation (DFT), ermittelt werden.

Zum Verarbeiten der vom Meßaufnehmer gelieferten Schwingungsmeßsignale s1, s2, ggf. auch des vorbezeichneten Temperatur- und/oder Dehnungsmeßsignals, beispielsweise nämlich auch zum Ermitteln der Massenstrom-Meßwerte und ggf. auch zum Ermitteln der Dichte-Meßwerte und/oder der Viskositäts-Meßwerte, kann die Umformerschaltung US, wie bereits angedeutet, ferner eine entsprechende Meß- und Steuerelektronik DSV aufweisen, die, wie in Fig. 2 schematisch dargestellt, mit dem Meßaufnehmer MW bzw. dessen Sensoranordnung 51, 52 elektrisch verbunden ist, beispielsweise derart, daß von der Meß- und Steuerelektronik DSV ein erster Meßsignaleingang der Umformerschaltung US für das Schwingungsmeßsignal s1 sowie wenigstens ein zweiter Meßsignaleingang der Umformerschaltung US für das Schwingungsmeßsignal s2 gebildet sind. Die Meß- und Steuerelektronik DSV kann vorteilhaft dafür eingerichtet sein, die zugeführten Schwingungsmeßsignale s1, s2, und ggf. auch die Temperatur- und/oder Dehnungsmeßsignale digital zu verarbeiten, beispielsweise nämlich mittels wenigstens einem Mikroprozessor und/oder wenigstens einem digitalen Signalprozessor (DSP) und/oder mittels eines programmierbaren Logikbausteins (FPGA) und/oder mittels eines kundenspezifisch programmierten Logikbausteins (ASIC) gebildet sein. Die im Betrieb des Coriolis-Massendurchfluß-Meßgeräts in einem oder mehreren der vorbezeichneten Mikroprozessoren bzw. digitalen Signalprozessoren der Umformerschaltung US ausgeführten Programm-Codes können jeweils z.B. in einem oder mehreren nicht flüchtigen Datenspeichern (EEPROM) der Umformerschaltung US persistent gespeichert sein und beim Starten derselben in einen in der Umformerschaltung US bzw. der Meß- und Steuerelektronik DSV vorgesehenen, z.B. im Mikroprozessor integrierten, flüchtigen Datenspeicher (RAM) geladen werden. Die Schwingungsmeßsignale s1, s2 sind für eine Verarbeitung im Mikroprozessor bzw. im digitalen Signalprozessor mittels entsprechender Analog-zu-digital-Wandler (A/D) selbstverständlich zunächst in entsprechende Digitalsignale umzuwandeln, beispielsweise nämlich indem die jeweilige Signalspannung der Schwingungsmeßsignale s1, s2 digitalisiert wird, vgl. hierzu beispielsweise die eingangs erwähnten US-B 63 11 136 oder US-A 2011/0271756. Dementsprechend ist nach einer weiteren Ausgestaltung der Erfindung in der Umformerschaltung US, beispielsweise nämlich in der vorbezeichneten Meß- und Steuerelektronik DSV, ein erster Analog-zu-Digital-Wandler für das Schwingungsmeßsignal s1 sowie ein zweiter Analog-zu-Digital-Wandler für das Schwingungsmeßsignal s2 und/oder ist in der in der Umformerschaltung US wenigstens ein nicht flüchtiger elektronischer Datenspeicher EEPROM vorgesehen, der dafür eingerichtet ist, digitale Daten, beispielsweise nämlich auch ohne eine angelegte Betriebsspannung, vorzuhalten. Mittels der Meß- und Steuerelektronik DSV kann zudem auch die vorbezeichnete Phasenfolge und/oder die vorbezeichnete Frequenzfolge generiert werden, beispielsweise nämlich auch an einem entsprechenden digitalen Phasenausgang bzw. an einem entsprechenden digitalen Frequenzausgang ausgeben und so für eine weitere Verarbeitung in der Umformerschaltung US bereitgestellt werden. Für den Fall, daß die Umformerschaltung US mittels der vorbezeichnete Antriebselektronik Exc sowie mittels der vorbezeichneten Meß- und Steuerelektronik DSV gebildet ist, kann deren Phasenausgang mit einem Phaseneingang eines in der Antriebselektronik Exc vorgesehenen, beispielsweise auch einen Bestandteil der vorbezeichneten Phasenregelschleife (PLL) bildenden, Phasenkomparators elektrisch verbunden sein und kann zudem nämlicher Phasenkomparator eingerichtet sein, eine anhand der Phasenfolge eine Phasendifferenz zwischen der vorbezeichneter Signalkomponente $e1_N$ des Treibersignals e1 und wenigstens einer der Nutzkomponenten $s1_N$, $s2_N$ festzustellen und/oder ein Ausmaß nämlicher Phasendifferenz zu ermitteln. Nach einer weiteren Ausgestaltung der Erfindung ist die Meß- und Steuerelektronik DSV ferner auch dafür eingerichtet, die vorbezeichneten ersten und zweiten Nutzkomponentenfolgen zu erzeugen und zumindest eine der Nutzkomponentenfolgen an einem digitalen Amplitudenausgang auszugeben. Der vorbezeichnete Amplitudenausgang der Meß- und Steuerelektronik DSV kann ferner beispielswiese auch mit einem eine Amplitude der Schwingungen des wenigstens einen Vibrationselements 10 erfassenden Amplitudeneingang der Antriebselektronik Exc elektrisch verbunden sein und die Antriebselektronik Exc kann zudem dafür eingerichtet sein, basierend auf der Amplitudenfolge das Treibersignal e1 so zu generieren, daß die Schwingungen des wenigstens einen Vibrationselements bzw. dessen Nutzschwingungen eine dafür vorgegeben Schwingungsamplitude erreichen bzw. nicht dauerhaft über- oder unterschreiten.

Wie bereits erwähnt, sind die Nutzkomponenten der beiden Schwingungsmeßsignale s1, s2 bzw. deren Amplituden, bedingt durch das Wirkprinzip der beiden elektrodynamischen Schwingungssensoren, von der zeitlichen Änderung des magnetischen Flusses innerhalb des Schwingungssensors, im Falle einer Tauchspule als Schwingungssensor nämlich des Verkettungs- bzw. Induktionsflusses innerhalb der jeweiligen Luftspule, abhängig; dies im besonderen auch in der Weise, daß eine von außerhalb des Coriolis-Massendurchfluß-Meßgeräts während dessen Meßbetriebs bewirkte zusätzliche Beeinflussung des bekannten inneren Magnetfeldes H0 bzw. eine damit einhergehende Beeinflussung eines bekannten, nämlich durch die vorbezeichnete Kalibrierung ermittelten Änderungsverhaltens (ΔΦ1/Δt, ΔΦ2/Δt) des magnetischen Flusses innerhalb des ersten und/oder zweiten Schwingungssensors, nicht zuletzt auch ein Änderungsverhalten (ΔΦ1, ΔΦ2) des magnetischen Flusses Φ1 bzw. Φ2 pro Schwingungsperiode der Nutzschwingungen, durch ein externes, nämlich von außerhalb des Coriolis-Massendurchfluß-Meßgeräts verursachtes, gleichwohl sich auch innerhalb des Coriolis-Massendurchfluß-Meßgeräts ausbreitendes Magnetfeld H1 eine unerwünschte, beispielsweise nämlich zu erhöhten Fehlern bei der Messung des Massenstroms führenden, Beeinflussung der ersten und/oder zweiten Nutzkomponente, mithin eine Beeinträchtigung der Funktionstüchtigkeit der Sensoranordnung bewirken kann. Ursachen für ein solches externes Magnetfeld kann beispielsweise ein in der Nähe des jeweiligen Coriolis-Massendurchfluß-Meßgeräts erzeugtes elektrisches Feld sein, etwa auf Grund von in der Nähe des Coriolis-Massendurchfluß-Meßgeräts betriebene Elektromotoren, Transformatoren, Wechselrichter oder hohe elektrische (Gleich-)Ströme führende Anlagenteilen, wie z.B. Stromschienen, und/oder kann - wie auch in Fig. 4b bzw. 5b jeweils angedeutet - ein in der Nähe des jeweiligen Coriolis-Massendurchfluß-Meßgeräts positionierter Magnet, beispielsweise ein Elektromagnet oder ein Permanentmagnet, sein. Im Falle von Tauchspulen als Schwingungssensoren ist das vorbezeichnete innere Magnetfeld H0 jeweils im wesentlichen durch deren jeweilige Permanentmagneten bzw. das vorbezeichnete Änderungsverhalten des magnetischen Flusses im wesentlichen durch die den Schwingungsbewegungen des wenigstens einen Vibrationselements entsprechenden Bewegungen des jeweiligen Permanentmagneten im zugehörigen Luftspalt bestimmt und kann das externe Magnetfeld H1 dazu führen, daß zumindest eine der dem inneren Magnetfeld entsprechenden vorbezeichneten Flußdichten (B1 bzw. B2) des jeweiligen magnetischen Flusses Φ1 bzw. Φ2 verändert wird (B1 → B1' = B1 + ΔB1, B1 → B2' = B2 + ΔB2). Eine solche unerwünschte Beeinflussung der ersten und/oder zweiten Nutzkomponente $s1_N$, $s2_N$ bzw. Beeinträchtigung der Funktionstüchtigkeit der Sensoranordnung durch ein externes Magnetfeld (H1) kann beispielsweise auch darin bestehen, daß - wie auch in Fig. 3 angedeutet - zumindest eine der Nutzkomponenten eine zusätzliche frequenzgleiche Störkomponente ($S1_{N, Err}$, $S2_{N, Err}$) enthält, derart, daß der vorbezeichnete Phasenwinkel nämlicher Nutzkomponente, mithin auch die vorbezeichnete Phasendifferenz Δφ12 (Δφ12 → Aφ12$_{Err}$) dann einen Phasenfehler, nämlich einen vom externen Magnetfeld bzw. dessen Einfluß auf den im jeweiligen Schwingungssensor letztlich etablierten magnetischen Fluß abhängig Anteil aufweist; dies beispielsweise auch derart, daß die Integrität zumindest eines der Schwingungsmeßsignale bzw. der Massenstrom-Meßwerte inakzeptabel herabgesetzt ist bzw. daß nämlicher Phasenfehler eine Meßgenauigkeit, mit der die Umformerschaltung US die Massenstrom-Meßwerte dann ermittelt aus einem für das Coriolis-Massendurchfluß-Meßgerät spezifizierten Toleranzbereich führt. Die Anwesenheit des vorbezeichneten externe Magnetfeldes H1 führt im besonderen auch dazu, daß das innerhalb der Schwingungssensoren 51, 52 jeweils etablierte Magnetfeld noch mehr von der idealen homogen Verteilung abweicht als bereits schon im ungestörten Fall (H0), nämlich während der vorbezeichneten Kalibrierung des Coriolis-Massendurchfluß-Meßgeräts bzw. ohne externes Magnetfeld H1. Im Ergebnis führt dies u.a. auch dazu, daß - wie auch aus einer Zusammenschau der Fig. 6a und 6b ohne weiteres ersichtlich - bei Anwesenheit eines externen Magnetfeldes H1 zumindest auch eine der Oberschwingungskomponenten regelmäßig einen im Vergleich zum vorbezeichneten ungestörten Fall erhöhte Amplitude $U1_{N1}$ bzw. $U2_{N1}$ aufweist.

Um ein möglichst zeitnahes Detektieren eines die Funktionstüchtigkeit der Sensoranordnung beeinträchtigenden externen Magnetfeldes H1 und/oder eines auf den Einfluß eines solchen externen Magnetfeldes H1 zurückzuführenden erhöhten, beispielsweise nämlich außerhalb einer Spezifikation des Coriolis-Massendurchfluß-Meßgerts liegenden, Meßfehlers zu ermöglichen, ist die Umformerschaltung des erfindungsgemäßen Coriolis-Massendurchfluß-Meßgeräts daher ferner auch dafür eingerichtet, anhand der Schwingungsmeßsignale, zusätzlich zu den Massenstrom-Meßwerten, zumindest gelegentlich auch einen oder mehrere Kennzahlenwerte für wenigstens eine Sensoren-Kennzahl SK1 zu ermitteln, derart, daß nämliche Sensoren-Kennzahl SK1 zumindest eine der ersten und zweiten Oberschwingungskomponenten charakterisiert und/oder von der Amplitude $U1_{N2}$, $U2_{N2}$ zumindest einer der ersten und zweiten Oberschwingungskomponenten abhängig ist, für die Sensoren-Kennzahl SK1 beispielsweise gilt:

$$SK1 = f\left(U1_{N2}\right) \tag{3}$$

und/oder

$$SK1 = f\left(U2_{N2}\right) \tag{4}$$

Die Sensoren-Kennzahl SK1 kann somit beispielsweise der Amplitude $U1_{N2}$ oder beispielsweise auch der Amplitude $U2_{N2}$ entsprechen und/oder eine von nämlichen Amplituden abgeleitete Kenngröße, beispielsweise nämlich auch ein Spitze-Spitze-Wert ($2 \cdot U1_{N2}$, $2 \cdot U2_{N2}$) und/oder ein Effektivwert ($\sqrt{2} \cdot U1_{N2}$, $\sqrt{2} \cdot U2_{N2}$) und/oder ein Gleichrichtwert ($2/\pi \cdot U1_{N2}$, $2/\pi \cdot U2_{N2}$) der ersten und/oder der zweiten Oberschwingungskomponente, sein. Als Sensoren-Kennzahl SK1 kann demnach beispielsweise auch eine Kenngröße dienen, die eine Abweichung wenigstens eines der Schwingungsmeßsignale s1, s2, beispielsweise nämlich deren jeweiliger Spannung $u_{i1}$, $u_{i2}$, von einem idealen Sinusverlauf charakterisiert bzw. quantifiziert, wie z.B. ein Klirrfaktor, ein Scheitelfaktor oder eine gesamte harmonische Verzerrung (THD). Nach einer weiteren Ausgestaltung ist Umformerschaltung US daher ferner eingerichtet, die Sensoren-Kennzahl SK1 so zu berechnen, daß die Sensoren-Kennzahl SK1 einen Klirrfaktor eines der Schwingungsmeßsignale s1, s2, beispielsweise nämlich einen Klirrfaktor einer der vorbezeichneten Spannungen $u_{i1}$, $u_{i2}$ bzw. einer Summe der Schwingungsmeßsignale s1, s2, beispielsweise nämlich einer Summe $u_{i12}$ der Spannungen $u_{i1}$, $u_{i2}$, oder einen Scheitelfaktor (Crest-Faktor) eines der Schwingungsmeßsignale s1, s2, beispielsweise nämlich einen Scheitelfaktor einer der vorbezeichneten Spannungen $u_{i1}$, $u_{i2}$ bzw. der vorbezeichneten Summe, oder eine gesamte harmonische Verzerrung eines der Schwingungsmeßsignale, beispielsweise nämlich eine gesamte harmonische Verzerrung einer der Spannungen $u_{i1}$, $u_{i2}$ bzw. der vorbezeichneten Summe, repräsentiert oder daß die Sensoren-Kennzahl beispielsweise eine hinsichtlich eines jeweiligen Betrags größte von jeweils paarweise für die Schwingungsmeßsignale s1, s2 berechnete Kenngröße repräsentiert, bzw. die Sensoren-Kennzahl SK1 anhand einer solchen Kenngröße zu berechnen.

Dementsprechend kann die Sensoren-Kennzahl SK1 mittels der Umformerschaltung US gemäß einer der Berechnungsvorschriften:

$$SK1 \rightarrow \sqrt{\frac{-U1_{N1}^2 + \sum\limits_{j=1}^{M} U1_{Nj}^2}{\sum\limits_{j=1}^{M} U1_{Nj}^2}} \quad (M \geq 2) \tag{5}$$

$$SK1 \rightarrow \sqrt{\frac{-U2_{N1}^2 + \sum\limits_{j=1}^{M} U2_{Nj}^2}{\sum\limits_{j=1}^{M} U2_{Nj}^2}} \quad (M \geq 2) \tag{6}$$

$$SK1 \rightarrow \sqrt{\frac{U2_{N2}^2}{\sum\limits_{j=1}^{M} U2_{Nj}^2}} \quad (M \geq 2) \tag{7}$$

$$SK1 = Max\left( \sqrt{\frac{-U1_{N1}^2 + \sum\limits_{j=1}^{M} U1_{Nj}^2}{\sum\limits_{j=1}^{M} U1_{Nj}^2}}, \sqrt{\frac{-U2_{N1}^2 + \sum\limits_{j=1}^{M} U2_{Nj}^2}{\sum\limits_{j=1}^{M} U2_{Nj}^2}} \right) \quad (M \geq 2) \tag{8}$$

$$SK1 = Max\left( \frac{-U1_{N1}^2 + \sum\limits_{j=1}^{M} U1_{Nj}^2}{\sum\limits_{j=1}^{M} U1_{Nj}^2}, \frac{-U2_{N1}^2 + \sum\limits_{j=1}^{M} U2_{Nj}^2}{\sum\limits_{j=1}^{M} U2_{Nj}^2} \right) \quad (M \geq 2) \tag{9}$$

$$SK1 \rightarrow \frac{\sum\limits_{j=2}^{M} U1_{Nj}^2}{U1_{N1}^2} \quad (M \geq 2) \tag{10}$$

$$SK1 \rightarrow \frac{\sum_{j=2}^{M} U2_{Nj}^2}{U2_{N1}^2} \qquad (M \geq 2) \qquad (11)$$

$$SK1 = Max\left(\frac{\sum_{j=2}^{M} U1_{Nj}^2}{U1_{N1}^2}, \frac{\sum_{j=2}^{M} U2_{Nj}^2}{U2_{N1}^2}\right) \qquad (M \geq 2) \qquad (12)$$

ermittelt werden.

Die Kennzahlenwerte für wenigstens eine Sensoren-Kennzahl SK1 können im Betrieb de Coriolis-Massendurchfluß-Meßgeräts wiederkehrend mittels der Umformerschaltung US anhand von für die Amplituden $U1_N$, $U2_N$, $U1_{N2}$, $U2_{N2}$ ohnehin ermittelten digitalen Amplitudenwerte ermittelt werden, beispielsweise nämlich auch unter Verwendung der vorbezeichneten Nutzkomponentenfolgen $U1_{N1}[m]$ bzw.$U2_{N1}[n]$ und Oberschwingungskomponentenfolgen $U1_{N2}[k]$ bzw.$U2_{N2}[l]$. Es hat sich ferner gezeigt, daß es für eine zeitnahe Detektion für das externe Magnetfeldes H1 durchaus ausreichend sein kann, wenn eine Kennzahlenwerte-Aktualisierungsrate, nämlich eine Aktualisierungsrate mit der Kennzahlenwerte für wenigstens eine Sensoren-Kennzahl SK1 ermittelt werden, auf nicht weniger als 1% der vorbezeichneten Meßwerte-Aktualisierungsrate eingestellt ist. Umgekehrt hat sich zudem gezeigt, daß die vorbezeichneten Aktualisierungsraten $f_{s1}$, $f_{s2}$ $f_{s3}$ und $f_{s4}$ für Ermittlung der Nutz- bzw. Oberschwingungskomponentenfolgen $U1_{N1}[m]$, $U2_{N1}[n]$, $U1_{N2}[k]$ bzw.$U2_{N2}[l]$, mithin auch die Kennzahlenwerte-Aktualisierungsrate ohne weiteres so gewählt sein können, daß sie jeweils etwa $1/10$ $s^{-1}$, jedenfalls aber nicht weniger als $1/60$ $s^{-1}$ betragen, mithin mindestens einmal pro Minute jeweils ein Amplitudenwert $U1_{N1}[m]$, $U2_{N1}[n]$, $U1_{N2}[k]$ und $U2_{N2}[l]$ sowie jeweils auch ein Kennzahlenwert ohne weiteres ermittelt werden können.

Zum Detektieren des Vorliegens eines die Funktionstüchtigkeit der Sensoranordnung, mithin die Meßgenauigkeit des Coriolis-Massendurchfluß-Meßgeräts beeinträchtigenden externen Magnetfeldes ist die Umformerschaltung US gemäß einer weiteren Ausgestaltung der Erfindung ferner eingerichtet, einen oder mehrere Kennzahlenwerte für die wenigstens eine Sensoren-Kennzahl SK1 auszuwerten, beispielsweise nämlich jeweils mit einem oder mehreren für die nämliche Sensoren-Kennzahl vorab ermittelten, beispielsweise nämlich in vorbezeichnetem nicht flüchtigen elektronischen Datenspeicher EEPROM gespeicherten, Bezugswerten $BK1_1$ ($BK1_1$, $BK1_2$...$BK1_i$...) zu vergleichen. Dementsprechend ist die Umformerschaltung US ferner auch dafür eingerichtet, zu ermitteln, ob ein oder mehrere Kennzahlenwerte für die Sensoren-Kennzahl SK1 größer als einer oder mehrere solcher, beispielsweise nämlich ein nicht mehr intaktes Coriolis-Massendurchfluß-Meßgerät repräsentierende, Bezugswerte für die Sensoren-Kennzahl SK1 ist und ggf. auch eine dies signalisierende (Störungs-)Meldung auszugeben, beispielsweise nämlich vor Ort anzuzeigen und/oder als Statusmeldung an das vorbezeichnete elektronischen Datenverarbeitungssystem zu übermitteln, und/oder beispielsweise auch keine Massenstrom-Meßwerte auszugeben. Bei den vorbezeichneten Bezugswerten für die Sensoren-Kennzahl SK1 kann es sich beispielsweise um eine (auf ein externes Magnetfeld zurückzuführende) verminderte Funktionstüchtigkeit der Sensoranordnung bzw. eine (auf ein externes Magnetfeld zurückzuführende) Fehlfunktion der Sensoranordnung repräsentierende Bezugswerte handeln. Nach einer weiteren Ausgestaltung der Erfindung ist die Umformerschaltung insb. dafür eingerichtet, einen oder mehrere Kennzahlenwerte für die Sensoren-Kennzahl SK1 mit wenigstens einem dafür ermittelten Bezugswert zu vergleichen, der den vorbezeichneten, auf das externe Magnetfeld H1 zurückzuführenden Phasenfehler repräsentiert. Nämliche Bezugswerte können beispielsweise vorab, beispielsweise nämlich vom Hersteller des Coriolis-Massendurchfluß-Meßgeräts bzw. bei einer während der Herstellung des Coriolis-Massendurchfluß-Meßgeräts vollzogenen (Werks-)Kalibrierung und/oder während der Inbetriebnahme vor Ort, und/oder im Betrieb des Coriolis-Massendurchfluß-Meßgeräts ermittelt werden; dies beispielsweise, derart, daß zunächst die jeweilige Sensoren-Kennzahl SK1 für das fertiggestellte, mithin intakte Coriolis-Massendurchfluß-Meßgerät ermittelt und mit einem einer noch tolerierbaren Beeinflussung entsprechenden Toleranzwert entsprechend in den Bezugswert $BK1_1$ umgerechnet wird und/oder indem die Sensoren-Kennzahl SK1 mittels des in der Nähe eines ein Referenz-Magnetfeld bewirkenden Magneten positionierten, ansonsten aber intakten Coriolis-Massendurchfluß-Meßgeräts direkt ermittelt und als Bezugswert $BK1_1$ im Datenspeicher EEPROM abgespeichert wird. Für den vorbezeichneten Fall, daß die Sensor-Kennzahl SK1 einen Klirrfaktor repräsentiert, kann der zughörige wenigstens eine Bezugswert $BK1_1$ beispielsweise so gewählt sein, daß er einem logaritmischem Klirrdämpfungsmaß von 60db (Dezibel) entspricht, mithin 0,1% beträgt.

Die Ermittlung der Kennzahlenwerte bzw. das Ermitteln des Vorliegens eines externen Magnetfeldes kann beispielsweise automatisiert, beispielsweise nämlich zeitgesteuert und/oder auch in Abhängigkeit von Änderungen von anderen Diagnosewerten, initiiert bzw. wieder ausgesetzt werden. Alternativ oder in Ergänzung kann die Ermittlung der Kennzahlenwerte aber auch von extern des Coriolis-Massendurchfluß-Meßgeräts initiiert und/oder ausgesetzt werden, beispielsweise nämlich ausgehend von vorbezeichnetem elektronischen Datenverarbeitungssystem über die vorbezeichnete Sende- und Empfangselektronik COM und/oder ausgehend von Bedienpersonal vor Ort über die vorbezeichnete Anzeige- und Bedienelement HMI. Dementsprechend ist die Umformerschaltung nach einer weiteren eingerichtet ist, einen zumindest die Ermittlung der Kennzahlenwerte für die Sensoren-Kennzahl SK1, ggf. nämlich auch deren vorbezeichnete Auswertung initiierenden Start-Befehl zu empfangen und auszuwerten, nämlich einen Eingang des Start-Befehls zu detektieren und daraufhin eine Ermittlung der Kennzahlenwerte für die erste Sensoren-Kennzahl SK1 in Gang zu setzen und/oder ist die Umformerschaltung eingerichtet, einen die Ermittlung der Kennzahlenwerte für die Sensoren-Kennzahl SK1 zumindest vorübergehend unterbindenden Stop-Befehl zu empfangen und auszuwerten, nämlich einen Eingang des Stop-Befehls zu detektieren und daraufhin eine Ermittlung der Kennzahlenwerte für die erste Sensoren-Kennzahl SK1 zumindest vorübergehend anzuhalten.

**Patentansprüche**

1. Coriolis-Massendurchfluß-Meßgerät, insb. Coriolis-Massendurchfluß-/Dichte-Meßgerät, zum Messen eines Massenstroms eines fluiden Meßstoffs - insb. eines Gases, einer Flüssigkeit oder einer Dispersion -, welches Coriolis-Massendurchfluß-Meßgerät umfaßt:

- einen Meßaufnehmer (MW), der wenigstens ein Vibrationselement (10), eine Erregeranordnung (41) sowie eine Sensoranordnung (51, 52) aufweist und der eingerichtet ist, den Meßstoff zu führen, nämlich zumindest zeitweise vom Meßstoff durchströmt zu werden;
- sowie eine mit dem Meßaufnehmer (MW), nämlich sowohl mit dessen Erregeranordnung (41) als auch dessen Sensoranordnung (51, 52) elektrisch gekoppelte, insb. mittels wenigstens eines Mikroprozessors gebildete, elektronische Umformerschaltung (US);
- wobei das wenigstens eine Vibrationselement (10) eingerichtet ist, vom strömenden Meßstoff kontaktiert und währenddessen vibrieren gelassen zu werden;
- wobei die Erregeranordnung eingerichtet ist, dorthin eingespeiste elektrische Leistung in erzwungene mechanische Schwingungen des Vibrationselements (10) bewirkende mechanische Leistung zu wandeln;
- wobei die Umformerschaltung (US) eingerichtet ist, ein elektrisches Treibersignal (e1) zu generieren und damit elektrische Leistung in die Erregeranordnung (41) einzuspeisen, derart, daß das wenigstens eine Vibrationselement (10) zumindest anteilig Nutzschwingungen, nämlich erzwungene mechanische Schwingungen mit wenigstens einer Nutzfrequenz ($f_N$), nämlich einer durch das elektrische Treibersignal vorgegebenen, insb. einer Resonanzfrequenz des Meßaufnehmers (MW) entsprechenden, Schwingungsfrequenz ausführt, die geeignet sind, im strömendem Meßstoff vom Massenstrom abhängige Corioliskräfte zu bewirken;
- wobei die Sensoranordnung (51, 52) zum Erfassen mechanischer Schwingungen des wenigstens einen Vibrationselements, insb. dessen Nutzschwingungen, einen elektrodynamischen ersten Schwingungssensor (51) und wenigstens einen, insb. zum ersten Schwingungssensor (51) baugleichen, elektrodynamischen zweiten Schwingungssensor (52) aufweist,

-- wobei der erste Schwingungssensor (51) eingerichtet ist, Schwingungsbewegungen des wenigstens einen Vibrationselements an einem ersten Meßpunkt in ein elektrisches erstes Schwingungsmeßsignal (s1) der Sensoranordnung zu wandeln, derart, daß nämliches erstes Schwingungsmeßsignal (s1)

--- sowohl wenigstens eine erste Nutzkomponente ($s1_{N1}$), nämlich eine Wechselspannungskomponente

---- mit einer der Nutzfrequenz entsprechenden Frequenz,
---- und mit einer von der Nutzfrequenz und einem ersten magnetischen Fluß ($\Phi1$), nämlich einem magnetischen Fluß durch den ersten Schwingungssensor (51) abhängigen Amplitude ($U1_{N1}$)

--- als auch wenigstens eine erste Oberschwingungskomponente ($s1_{N2}$), nämlich eine Wechselspannungskomponente

---- mit einer einem ganzzahligen Vielfachen, insb. nämlich einem Doppelten, der Nutzfrequenz entsprechenden Frequenz

---- und mit einer vom ersten magnetischen Fluß (Φ1) abhängigen Amplitude (U1$_{N2}$) aufweist,

-- und wobei der zweite Schwingungssensor (52) eingerichtet ist, Schwingungsbewegungen des wenigstens einen Vibrationselements an einem vom ersten Meßpunkt entfernten zweiten Meßpunkt in ein elektrisches zweites Schwingungsmeßsignal (s2) der Sensoranordnung zu wandeln, derart, daß nämliches zweites Schwingungsmeßsignal (s2)

--- sowohl wenigstens eine zweite Nutzkomponente (s2$_{N1}$), nämlich eine Wechselspannungskomponente

---- mit einer der Nutzfrequenz entsprechenden Frequenz
---- und mit einer von der Nutzfrequenz und einem zweiten magnetischen Fluß (Φ2), nämlich einem magnetischen Fluß durch den zweiten Schwingungssensor (52) abhängigen Amplitude (U2$_{N1}$)

--- als auch wenigstens eine zweite Oberschwingungskomponente (s2$_{N2}$), nämlich eine Wechselspannungskomponente

---- mit einer einem ganzzahligen Vielfachen, insb. nämlich einem Doppelten, der Nutzfrequenz entsprechenden Frequenz,
---- und mit einer vom zweiten magnetischen Fluß (Φ2) abhängigen Amplitude (U2$_{N2}$) aufweist;

- und wobei die Umformerschaltung (US) eingerichtet ist, die ersten und zweiten Schwingungsmeßsignale (s1, s2) zu empfangen und auszuwerten, nämlich

-- sowohl anhand der ersten und zweiten Schwingungsmeßsignale (s1, s2) den Massenstrom repräsentierende, insb. digitale, Massenstrom-Meßwerte zu ermitteln, insb. nämlich auszugeben,
-- als auch anhand wenigstens eines der ersten und zweiten Schwingungsmeßsignale (s1, s2) Kennzahlwerte für wenigstens eine Sensoren-Kennzahl (SK1), nämlich eine zumindest eine der ersten und zweiten Oberschwingungskomponenten charakterisierende und/oder von der Amplitude zumindest einer der ersten und zweiten Oberschwingungskomponenten abhängige Kennzahl, insb. nämlich einen Spitzenwert der ersten Oberschwingungskomponente und/oder einen Effektivwert der ersten Oberschwingungskomponente und/oder einen Gleichrichtwert der ersten Oberschwingungskomponente und/oder eine Schwingungsbreite der ersten Oberschwingungskomponente und/oder einen Spitzenwert der zweiten Oberschwingungskomponente und/oder einen Effektivwert der zweiten Oberschwingungskomponente und/oder einen Gleichrichtwert der zweiten Oberschwingungskomponente und/oder eine Schwingungsbreite der zweiten Oberschwingungskomponente, zu ermitteln, insb. derart, daß die wenigstens eine Sensoren-Kennzahl einen Klirrfaktor eines der ersten und zweiten Schwingungsmeßsignale oder einen Klirrfaktor einer Summe der ersten und zweiten Schwingungsmeßsignale oder einen Scheitelfaktor eines der ersten und zweiten Schwingungsmeßsignale oder einen Scheitelfaktor einer Summe der ersten und zweiten Schwingungsmeßsignale oder eine gesamte harmonische Verzerrung (THD) eines der ersten und zweiten Schwingungsmeßsignale oder eine gesamte harmonische Verzerrung (THD) einer Summe der ersten und zweiten Schwingungsmeßsignale repräsentiert;

- wobei jede der ersten und zweiten Nutzkomponenten jeweils einen vom Massenstrom abhängigen Phasenwinkel aufweist;
- und wobei die Umformerschaltung eingerichtet ist,

-- die Massenstrom-Meßwerte anhand einer Phasendifferenz zwischen den ersten und zweiten Nutzkomponenten, nämlich einer Differenz zwischen dem Phasenwinkel der ersten Nutzkomponente und dem Phasenwinkel der zweiten Nutzkomponente zu berechnen,
-- sowie einen oder mehrere Kennzahlenwerte für die Sensoren-Kennzahl mit wenigstens einem für die Sensoren-Kennzahl ermittelten Bezugswert zu vergleichen, der einen auf ein externes Magnetfeld (H1) zurückzuführenden Phasenfehler, nämlich einen vom externen Magnetfeld (H1) abhängigen Anteil der Phasendifferenz zwischen den ersten und zweiten Nutzkomponenten repräsentiert.

2. Coriolis-Massendurchfluß-Meßgerät nach einem der vorherigen Ansprüche, wobei die Umformerschaltung eingerichtet ist, einen oder mehrere Kennzahlenwerte für die Sensoren-Kennzahl jeweils mit einem oder mehreren für die Sensoren-Kennzahl, insb. vom Hersteller des Coriolis-Massendurchfluß-Meßgeräts und/oder bei der Herstellung des Coriolis-Massendurchfluß-Meßgerät, ermittelten Bezugswerten, insb. einem oder mehreren eine verminderte Funktionstüchtigkeit der Sensoranordnung repräsentierenden Bezugswerten und/oder einem oder mehreren eine Fehlfunktion der Sensoranordnung repräsentierenden Bezugswerten und/oder einem oder mehreren ein nicht mehr intaktes Coriolis-Massendurchfluß-Meßgerät repräsentierenden Bezugswerten und/oder einen auf ein externes Magnetfeld zurückzuführenden Phasenfehler repräsentierenden Bezugswerten, zu vergleichen.

3.  Coriolis-Massendurchfluß-Meßgerät nach dem vorherigen Anspruch, wobei die Umformerschaltung eingerichtet ist, zu ermitteln, ob eine oder mehrere Kennzahlenwerte für die Sensoren-Kennzahl größer als der wenigstens eine Bezugswert für die Sensoren-Kennzahl ist, insb. nämlich falls ein oder mehrere Kennzahlenwerte für die Sensoren-Kennzahl größer als ein oder mehrere eine verminderte Funktionstüchtigkeit der Sensoranordnung repräsentierende Bezugswerte und/oder größer als ein oder mehrere eine Fehlfunktion der Sensoranordnung repräsentierende Bezugswerte ist und/oder größer als ein oder mehrere ein nicht mehr intaktes Coriolis-Massendurchfluß-Meßgerät repräsentierenden Bezugswerten ist und/oder einen auf ein externes Magnetfeld zurückzuführenden erhöhten Phasenfehler repräsentierenden Bezugswerten, eine dies signalisierende Meldung auszugeben und/oder keine Massenstrom-Meßwerte auszugeben.

4.  Coriolis-Massendurchfluß-Meßgerät nach einem der vorherigen Ansprüche,

    - wobei die Umformerschaltung eingerichtet ist, aus dem ersten Schwingungsmeßsignal (s1) eine erste Nutzkomponentenfolge, nämlich eine Sequenz von die Amplitude ($U1_{N1}$) der ersten Nutzkomponente ($s1_N$) quantifizierenden digitalen Amplitudenwerten ($U1_{N1}$ [m]) generieren; und/oder
    - wobei die Umformerschaltung eingerichtet ist, aus dem zweiten Schwingungsmeßsignal (s2) eine zweite Nutzkomponentenfolge, nämlich eine Sequenz von die Amplitude ($U2_{N1}$) der zweiten Nutzkomponente ($s2_N$) quantifizierenden digitalen Amplitudenwerten ($U2_{N1}$ [n]) generieren.

5.  Coriolis-Massendurchfluß-Meßgerät nach dem vorherigen Anspruch,

    - wobei die Umformerschaltung eingerichtet ist, aus dem ersten Schwingungsmeßsignal (s1) eine erste Oberschwingungskomponentenfolge, nämlich eine Sequenz von die Amplitude ($U1_{N2}$) der ersten Oberschwingungskomponente ($s1_{N2}$) quantifizierenden digitalen Amplitudenwerten ($U1_{N2}[k]$) zu generieren; und/oder
    - wobei die Umformerschaltung eingerichtet ist, aus dem zweiten Schwingungsmeßsignal (s2) eine zweite Oberschwingungskomponentenfolge, nämlich eine Sequenz von die Amplitude ($U2_{N2}$) der zweiten Oberschwingungskomponente ($s2_{N2}$) quantifizierenden digitalen Amplitudenwerten ($U2_{N2}[l]$) zu generieren.

6.  Coriolis-Massendurchfluß-Meßgerät nach dem vorherigen Anspruch, wobei die Umformerschaltung eingerichtet ist, Kennzahlenwerte für die Sensoren-Kennzahl (SK1) unter Verwendung sowohl wenigstens einer der ersten und zweiten Nutzkomponentenfolgen als auch wenigsten einer der ersten und zweiten Oberschwingungskomponentenfolgen zu berechnen.

7.  Coriolis-Massendurchfluß-Meßgerät nach einem der vorherigen Ansprüche, wobei die Umformerschaltung einen nicht-flüchtigen elektronischen Datenspeicher (EEPROM) aufweist, der dafür eingerichtet ist, digitale Daten, insb. auch ohne eine angelegte Betriebsspannung, vorzuhalten, insb. nämlich einen oder mehrere vorab ermittelte Bezugswerte für die Sensoren-Kennzahl (SK1) zu speichern.

8.  Coriolis-Massendurchfluß-Meßgerät nach dem vorherigen Anspruch, wobei im elektronischen Datenspeicher ein oder mehrere, insb. vom Hersteller des Coriolis-Massendurchfluß-Meßgeräts und/oder bei der Herstellung des Coriolis-Massendurchfluß-Meßgeräts und/oder im Betrieb des Coriolis-Massendurchfluß-Meßgeräts vorab ermittelte, Bezugswerte für die Sensoren-Kennzahl, insb. nämlich ein oder mehrere eine verminderte Funktionstüchtigkeit der Sensoranordnung repräsentierende Bezugswerte und/oder nämlich ein oder mehrere eine Fehlfunktion der Sensoranordnung repräsentierende Bezugswerte und/oder einen auf ein externes Magnetfeld zurückzuführenden erhöhten Phasenfehler repräsentierende Bezugswerten, gespeichert sind.

9.  Coriolis-Massendurchfluß-Meßgerät nach Anspruch 7 oder 8, wobei die Umformerschaltung eingerichtet ist, einen oder mehrere Kennzahlenwerte für die Sensoren-Kennzahl jeweils mit einem oder mehreren im Datenspeicher gespeicherten Bezugswerten für die Sensoren-Kennzahl zu vergleichen.

10. Coriolis-Massendurchfluß-Meßgerät nach einem der vorherigen Ansprüche,

- wobei die Umformerschaltung eingerichtet ist, die Massenstrom Meßwerte mit einer Aktualisierungsrate zu ermitteln, die nicht kleiner, insb. nämlich größer, ist als eine Aktualisierungsrate mit der die Umformerschaltung die Kennzahlenwerte für die Sensoren-Kennzahl ermittelt; und/oder

- wobei die Umformerschaltung eingerichtet ist, einen zumindest die Ermittlung der Kennzahlenwerte für die erste Sensoren-Kennzahl (SK1) initiierenden Start-Befehl zu empfangen und auszuwerten, nämlich einen Eingang des Start-Befehls zu detektieren und daraufhin eine Ermittlung der Kennzahlenwerte für die erste Sensoren-Kennzahl (SK1) in Gang zu setzen; und/oder

- wobei die Umformerschaltung eingerichtet ist, einen die Ermittlung der Kennzahlenwerte für die erste Sensoren-Kennzahl (SK1) zumindest vorübergehend unterbindenden Stop-Befehl zu empfangen und auszuwerten, nämlich einen Eingang des Stop-Befehls zu detektieren und daraufhin eine Ermittlung der Kennzahlenwerte für die erste Sensoren-Kennzahl (SK1) zumindest vorübergehend anzuhalten; und/oder

- wobei die Umformerschaltung einen ersten Analog-zu-Digital-Wandler (A/D) für das erste Schwingungsmeßsignal sowie einen zweiten Analog-zu-Digital-Wandler für das zweite Schwingungsmeßsignal aufweist.

11. Coriolis-Massendurchfluß-Meßgerät nach einem der vorherigen Ansprüche,

- wobei der erste Schwingungssensor mittels einer ersten Tauchspule und der zweite Schwingungssensor mittels einer zweiten Tauchspule gebildet ist; und/oder

- wobei die Erregeranordnung zum Anregen von Schwingungen des wenigstens eine Meßrohrs einen, insb. elektrodynamischen und/oder einzigen, Schwingungserreger (41) aufweist; und/oder

- wobei das wenigstens eine Vibrationselement mittels wenigstens eines, insb. zumindest abschnittsweise geraden und/oder zumindest abschnittsweise kreisbogenförmigen, Rohrs mit einem von einer, insb. metallischen, Rohrwand und einem davon umhüllten Lumen gebildet und dafür eingerichtet ist, von Meßstoff durchströmt und währenddessen vibrieren gelassen zu werden.

12. Coriolis-Massendurchfluß-Meßgerät nach einem der vorherigen Ansprüche,

- wobei der erste Schwingungssensor einen, insb. unter Bildung des ersten Meßpunkts mechanisch mit dem wenigstens einen Vibrationselement verbundenen, ersten Permanentmagneten sowie eine erste Luftspule aufweist,

-- wobei der erste Permanentmagnet einen den ersten magnetischen Fluß (B1) führenden ersten Luftspalt bildet und die erste Luftspule zumindest teilweise innerhalb nämlichen ersten Luftspalts positioniert ist,
-- und wobei der erste Permanentmagnet und die erste Luftspule eingerichtet sind, durch Schwingungsbewegungen des wenigstens einen Vibrationselements relativ zueinander bewegt zu werden und eine als erstes Schwingungsmeßsignal dienliche erste Induktionsspannung zu generieren; und

- wobei der zweite Schwingungssensor einen, insb. unter Bildung des zweiten Meßpunkts mechanisch mit dem wenigstens einen Vibrationselement verbundenen, zweiten Permanentmagneten sowie eine zweite Luftspule aufweist,

-- wobei der zweite Permanentmagnet einen den zweiten magnetischen Fluß (B2) führenden zweiten Luftspalt bildet und die zweite Luftspule zumindest teilweise innerhalb nämlichen zweiten Luftspalts positioniert ist,
-- und wobei der zweite Permanentmagnet und die zweite Luftspule eingerichtet sind, durch Schwingungsbewegungen des wenigstens einen Vibrationselements relativ zueinander bewegt zu werden und eine als zweites Schwingungsmeßsignal dienliche zweite Induktionsspannung zu generieren.

**Claims**

1. A Coriolis mass flow meter, in particular a Coriolis mass flow/density meter, for measuring a mass flow of a fluid substance to be measured - in particular of a gas, a liquid or a dispersion -, which Coriolis mass flow meter comprises:

- a sensing element (MW) which has at least one vibration element (10), an exciter assembly (41) and a sensor assembly (51, 52) and which is designed to guide the substance to be measured, that is to say to be flowed through at least temporarily by the substance to be measured;

- and an electronic transformer circuit (US) electrically coupled to the sensing element (MW), that is to say both to its exciter assembly (41) and its sensor assembly (51, 52), and formed, in particular, by means of at least one microprocessor;
- wherein the at least one vibration element (10) is designed to be contacted by the flowing substance to be measured and to be vibrated during the process;
- wherein the exciter assembly is designed to convert electrical power fed thereto into mechanical power producing forced mechanical vibrations of the vibration element (10);
- wherein the transformer circuit (US) is designed to generate an electric driver signal (e1) and thereby to feed electrical power to the exciter assembly (41) such that the at least one vibration element (10) at least proportionally produces useful vibrations, that is to say forced mechanical vibrations with at least one useful frequency ($f_N$), that is to say a vibration frequency specified by the electric driver signal, in particular corresponding to a resonance frequency of the sensing element (MW), which vibrations are suitable for producing Coriolis forces based on the mass flow in the flowing substance to be measured;
- wherein, in order to detect mechanical vibrations of the at least one vibration element, in particular its useful vibrations, the sensor assembly (51, 52) has an electrodynamic first vibration sensor (51) and at least one electrodynamic second vibration sensor (52) which is, in particular, structurally identical to the first vibration sensor (51),

-- wherein the first vibration sensor (51) is designed to convert vibrational movements of the at least one vibration element at a first measurement point into an electric first vibration measurement signal (s1) of the sensor assembly such that said first vibration measurement signal (s1)

--- has both at least one first useful component ($s1_{N1}$), that is to say an AC voltage component

---- with a frequency corresponding to the useful frequency,
---- and with an amplitude ($U1_{N1}$) depending on the useful frequency and a first magnetic flow ($\phi1$), that is to say a magnetic flow through the first vibration sensor (51),

--- and at least one first harmonic component ($s1_{N2}$), that is to say an AC voltage component

---- with a frequency corresponding to an integer multiple of, that is to say in particular twice, the useful frequency,
---- and with an amplitude ($U1_{N2}$) depending on the first magnetic flow ($\phi1$),

-- and wherein the second vibration sensor (52) is designed to convert vibrational movements of the at least one vibration element at a second measurement point remote from the first measurement point into an electric second vibration measurement signal (s2) of the sensor assembly such that said second vibration measurement signal (s2)

--- has both at least one second useful component ($s2_{N1}$), that is to say an AC voltage component

---- with a frequency corresponding to the useful frequency,
---- and with an amplitude ($U2_{N1}$) depending on the useful frequency and a second magnetic flow ($\Phi2$), that is to say a magnetic flow through the second vibration sensor (52),

--- and at least one second harmonic component ($s2_{N2}$), that is to say an AC voltage component

---- with a frequency corresponding to an integer multiple of, that is to say in particular twice, the useful frequency,
---- and with an amplitude ($U2_{N2}$) depending on the second magnetic flow ($\Phi2$),

- and wherein the transformer circuit (US) is designed to receive and evaluate the first and second vibration measurement signals (s1, s2), that is to say

-- both to ascertain, that is to say in particular to output, in particular digital, mass flow measurement values representing the mass flow by reference to the first and second vibration measurement signals (s1, s2);
-- and to ascertain, by reference to at least one of the first and second vibration measurement signals (s1, s2), characteristic number values for at least one sensor characteristic number (SK1), that is to say a characteristic number characterizing at least one of the first and second harmonic components and/or depending on the amplitude of at least one of the first and second, that is to say in particular a peak value of the first harmonic component and/or an effective value of the first harmonic component and/or a rectified value of the first harmonic component and/or a vibration width of the first harmonic component and/or a peak value of the second harmonic component and/or an effective value of the second harmonic component and/or a rectified value of the second harmonic component and/or a vibration width of the second harmonic component, in particular such that the at least one sensor characteristic number represents a distortion factor of one of the first and second vibration measurement signals or a distortion factor of a sum of the first and second vibration measurement signals or a crest factor of one of the first and second vibration measurement signals or a crest factor of a sum of the first and second vibration measurement signals or a total harmonic distortion (THD) of one of the first and second vibration measurement signals or a total harmonic distortion (THD) of a sum of the first and second vibration measurement signals;

- wherein each of the first and second useful components has a phase angle depending on the mass flow;
- and wherein the transformer circuit is designed

-- to calculate the mass flow measurement values by reference to a phase difference between the first and second useful components, that is to say a difference between the phase angle of the first useful component and the phase angle of the second useful component,
-- and to compare one or more characteristic number values for the sensor characteristic number with at least one reference value ascertained for the sensor characteristic number, which reference value represents a phase error attributable to an external magnetic field (H1), that is to say a proportion of the phase difference between the first and second useful components that depends on the external magnetic field (H1).

2. The Coriolis mass flow meter as claimed in one of the preceding claims, wherein the transformer circuit is designed to compare one or more characteristic number values for the sensor characteristic number in each case with one or more reference values ascertained for the sensor characteristic number, in particular by the manufacturer of the Coriolis mass flow meter and/or during the manufacture of the Coriolis mass flow meter, in particular one or more reference values representing a reduced functionality of the sensor assembly and/or one or more reference values representing a malfunction of the sensor assembly and/or one or more reference values representing a Coriolis mass flow meter that is no longer intact and/or reference values representing a phase error attributable to an external magnetic field.

3. The Coriolis mass flow meter as claimed in the preceding claim, wherein the transformer circuit is designed to ascertain whether one or more characteristic number values for the sensor characteristic number are greater than the at least one reference value for the sensor characteristic number, that is to say in particular if one or more characteristic number values for the sensor characteristic number are greater than one or more reference values representing a reduced functionality of the sensor assembly and/or are greater than one or more reference values representing a malfunction of the sensor assembly and/or are greater than one or more reference values representing a Coriolis mass flow meter that is no longer intact and/or reference values representing an increased phase error attributable to an external magnetic field, and to output a message signaling this and/or not to output any mass flow measurement values.

4. The Coriolis mass flow meter as claimed in one of the preceding claims,

- wherein the transformer circuit is designed to generate a first useful component sequence from the first vibration measurement signal (s1), that is to say a sequence of digital amplitude values ($U1_{N1}$ [m]) quantifying the first useful component ($s1_N$); and/or
- wherein the transformer circuit is designed to generate a second useful component sequence from the second vibration measurement signal (s2), that is to say a sequence of digital amplitude values ($U2_{N1}$ [n]) quantifying the second useful component ($s2_N$).

5. The Coriolis mass flow meter as claimed in the preceding claim,

- wherein the transformer circuit is designed to generate a first harmonic component sequence from the first vibration measurement signal (s1), that is to say a sequence of digital amplitude values ($U1_{N2}$[k]) quantifying the first harmonic component ($s1_{N2}$); and/or
- wherein the transformer circuit is designed to generate a second harmonic component sequence from the second vibration measurement signal (s2), that is to say a sequence of digital amplitude values ($U2_{N2}[1]$) quantifying the second harmonic component ($s2_{Ns}$).

6. The Coriolis mass flow meter as claimed in one of the preceding claims, wherein the transformer circuit is designed to calculate characteristic number values for the sensor characteristic number (SK1) using both at least one of the first and second useful component sequences and at least one of the first and second harmonic component sequences.

7. The Coriolis mass flow meter as claimed in one of the preceding claims, wherein the transformer circuit has a non-volatile electronic data memory (EEPROM) which is designed to store digital data, in particular including without any operating voltage supplied, that is to say in particular to store one or more previously ascertained reference values for the sensor characteristic number (SK1).

8. The Coriolis mass flow meter as claimed in the preceding claim, wherein one or more reference values for the sensor characteristic number, in particular ascertained beforehand by the manufacturer of the Coriolis mass flow meter and/or during the manufacture of the Coriolis mass flow meter and/or during operation of the Coriolis mass flow meter, that is to say in particular one or more reference values representing a reduced functionality of the sensor assembly and/or that is to say one or more reference values representing a malfunction of the sensor assembly and/or reference values representing an increased phase error attributable to an external magnetic field, are stored in the electronic data memory.

9. The Coriolis mass flow meter as claimed in claim 7 or 8, wherein the transformer circuit is designed to compare one or more characteristic number values for the sensor characteristic number in each case with one or more reference values for the sensor characteristic number stored in the data memory.

10. The Coriolis mass flow meter as claimed in one of the preceding claims,

- wherein the transformer circuit is designed to ascertain the mass flow measurement values with an update rate that is no smaller, that is to say in particular greater, than an update rate at which the transformer circuit ascertains the characteristic number values for the sensor characteristic number; and/or
- wherein the transformer circuit is designed to receive and evaluate a start command initiating at least the ascertainment of the characteristic number values for the first sensor characteristic number (SK1), that is to say to detect an input of the start command and then to set in motion ascertainment of the characteristic number values for the first sensor characteristic number (SK1); and/or
- wherein the transformer circuit is designed to receive and evaluate a stop command at least temporarily discontinuing the ascertainment of the characteristic number values for the first sensor characteristic number (SK1), that is to say to detect an input of the stop command and then to at least temporarily suspend ascertainment of the characteristic number values for the first sensor characteristic number (SK1); and/or
- wherein the transformer circuit has a first analog-to-digital converter (A/D) for the first vibration measurement signal and a second analog-to-digital converter for the second vibration measurement signal.

11. The Coriolis mass flow meter as claimed in one of the preceding claims,

- wherein the first vibration sensor is formed by means of a first plunger coil and the second vibration sensor is formed by means of a second plunger coil; and/or
- wherein the exciter assembly has an, in particular electrodynamic and/or single, vibration exciter (41) to cause vibrations of the at least one measurement tube; and/or
- wherein the at least one vibration element is formed by means of at least one, in particular at least partially straight and/or at least partially arcuate, tube with an, in particular metallic, tube wall and a lumen surrounded thereby and is designed to be flowed through by substance to be measured and vibrated in the process.

12. The Coriolis mass flow meter as claimed in one of the preceding claims,

- wherein the first vibration sensor has a first permanent magnet, in particular mechanically connected to the at least one vibration element forming the first measurement point, and a first air coil,

 -- wherein the first permanent magnet forms a first air gap guiding the first magnetic flow (B 1) and the first air coil is positioned at least partially within said first air gap,

-- and wherein the first permanent magnet and the first air gap are designed to be moved relative to one another through vibrational movements of the at least one vibration element and to generate a first induction voltage serving as a first vibration measurement signal; and

- wherein the second vibration sensor has a second permanent magnet, in particular mechanically connected to the at least one vibration element forming the second measurement point, and a second air coil,

-- wherein the second permanent magnet forms a second air gap guiding the second magnetic flow (B2) and the second air coil is positioned at least partially within said second air gap,
-- and wherein the second permanent magnet and the second air gap are designed to be moved relative to one another through vibrational movements of the at least one vibration element and to generate a second induction voltage serving as a second vibration measurement signal

## Revendications

1. Appareil de mesure de débit massique Coriolis, notamment un débitmètre massique / débitmètre massique Coriolis, destiné à la mesure d'un débit massique d'un produit fluide - notamment un gaz, un liquide ou une dispersion - lequel appareil de mesure comprend :

- un capteur (MW) présentant au moins un élément vibrant (10), un dispositif d'excitation (41) ainsi qu'un arrangement de capteurs (51, 52), lequel capteur est conçu pour guider le produit, à savoir pour être traversé au moins temporairement par le produit ;
- ainsi qu'un circuit de transmetteur électronique (US) couplé électriquement au capteur (MW), à savoir aussi bien à son dispositif d'excitation (41) qu'à son arrangement de capteurs (51, 52), et formé notamment au moyen d'au moins un microprocesseur ;
- l'au moins un élément vibrant (10) étant conçu pour être mis en contact avec le produit qui s'écoule et pour être mis en vibrations pendant ce temps ;
- le dispositif d'excitation étant conçu pour convertir l'énergie électrique qui lui est fournie en énergie mécanique provoquant des vibrations mécaniques forcées de l'élément vibrant (10) ;
- le circuit de transmetteur (US) étant conçu pour générer un signal d'attaque électrique ($e_1$) et injecter ainsi de l'énergie électrique dans le dispositif d'excitation (41), de telle sorte que l'au moins un élément vibrant (10) produise au moins en partie des vibrations utiles, à savoir des vibrations mécaniques forcées avec au moins une fréquence utile ($f_N$), à savoir une fréquence de vibration prédéfinie par le signal d'attaque électrique, correspondant notamment à une fréquence de résonance du capteur (MW), lesquelles vibrations sont appropriées pour provoquer des forces de Coriolis dépendant du débit massique dans le produit en écoulement ;
- l'arrangement de capteurs (51, 52) destiné à mesurer les vibrations mécaniques de l'au moins un élément vibrant, notamment ses vibrations utiles, comprenant un premier capteur de vibrations (51) électrodynamique et au moins un deuxième capteur de vibrations (52) électrodynamique, notamment de conception identique au premier capteur de vibrations,

-- le premier capteur de vibrations (51) étant conçu pour convertir les mouvements de vibration de l'au moins un élément vibrant au niveau d'un premier point de mesure en un premier signal de mesure de vibration (s1) électrique de l'arrangement de capteurs, de telle sorte que ledit premier signal de mesure de vibration (s1) comporte

--- au moins une première composante utile ($s1_{N1}$), à savoir une composante de tension alternative

---- avec une fréquence correspondant à la fréquence utile,
---- et avec une amplitude ($U1_{N1}$) dépendant de la fréquence utile et d'un premier flux magnétique ($\Phi 1$), à savoir un flux magnétique à travers le premier capteur de vibrations (51),

--- ainsi qu'au moins une première composante harmonique ($s1_{N2}$), à savoir une composante de tension alternative

---- avec une fréquence correspondant à un multiple entier, notamment un double, de la fréquence utile
---- et avec une amplitude ($U1_{N2}$) dépendant du premier flux magnétique ($\Phi 1$),

-- et le deuxième capteur de vibrations (52) étant conçu pour convertir les mouvements de vibration de l'au moins un élément vibrant, au niveau d'un deuxième point de mesure éloigné du premier point de mesure, en un deuxième signal de mesure de vibration (s2) électrique de l'arrangement de capteurs de telle sorte que ledit deuxième signal de mesure de vibration (s2) comporte

--- au moins une deuxième composante utile ($s2_{N1}$), à savoir une composante de tension alternative

---- avec une fréquence correspondant à la fréquence utile,
---- et avec une amplitude ($U2_{N1}$) dépendant de la fréquence utile et d'un deuxième flux magnétique ($\Phi 2$), à savoir un flux magnétique à travers le deuxième capteur de vibrations (52),

--- ainsi qu'au moins une deuxième composante harmonique ($s2_{N2}$), à savoir une composante de tension alternative

---- avec une fréquence correspondant à un multiple entier, notamment un double, de la fréquence utile
---- et avec une amplitude ($U2_{N2}$) dépendant du deuxième flux magnétique ($\Phi 1$),

- et le circuit de transmetteur (US) étant conçu pour recevoir et évaluer le premier et le deuxième signal de mesure de vibration (s1, s2), à savoir

-- pour déterminer, notamment également pour émettre, à l'aide du premier et du deuxième signal de mesure de vibration (s1, s2), des valeurs mesurées de débit massique, notamment numériques, représentant le débit massique,
-- ainsi que pour déterminer, à l'aide d'au moins l'un parmi le premier et le deuxième signal de mesure de vibration (s1, s2), des valeurs caractéristiques pour au moins un indice de capteur (SK1), à savoir un indice caractérisant au moins l'une parmi la première et la deuxième composante harmonique et/ou dépendant de l'amplitude d'au moins l'une parmi la première et la deuxième composante harmonique, notamment à savoir une valeur de crête de la première composante harmonique et/ou une valeur efficace de la première composante harmonique et/ou une valeur de redressement de la première composante harmonique et/ou une amplitude de vibration de la première composante harmonique et/ou une valeur de crête de la deuxième composante harmonique et/ou une valeur efficace de la deuxième composante harmonique et/ou une valeur de redressement de la deuxième composante harmonique et/ou une amplitude de vibration de la deuxième composante harmonique, notamment de telle sorte que l'au moins un indice de capteur représente un facteur de distorsion harmonique de l'un parmi le premier et le deuxième signal de mesure de vibration ou un facteur de distorsion harmonique d'une somme du premier et du deuxième signal de mesure de vibration ou un facteur de crête de l'un parmi le premier et le deuxième signal de mesure de vibration ou un facteur de crête d'une somme du premier et du deuxième signal de mesure de vibration ou une distorsion harmonique totale (THD) de l'un parmi le premier et le deuxième signal de mesure de vibration ou une distorsion harmonique totale (THD) d'une somme du premier et du deuxième signal de mesure de vibration ;

- chacune parmi la première et la deuxième composante utile présentant respectivement un angle de phase dépendant du débit massique ;
- et le circuit de transmetteur étant conçu pour

-- calculer les valeurs mesurées de débit massique à l'aide d'une différence de phase entre la première et la deuxième composante utile, à savoir une différence entre l'angle de phase de la première composante utile et l'angle de phase de la deuxième composante utile, ainsi que pour
-- comparer une ou plusieurs valeurs caractéristiques pour l'indice de capteur avec au moins une valeur de référence déterminée pour l'indice de capteur, laquelle valeur de référence représente une erreur de phase due à un champ magnétique externe (H1), à savoir une part, dépendant du champ magnétique externe (H1), de la différence de phase entre la première et la deuxième composante utile.

2. Débitmètre massique Coriolis selon l'une des revendications précédentes, pour lequel le circuit de transmetteur est conçu pour comparer respectivement une ou plusieurs valeurs caractéristiques pour l'indice de capteur avec une ou plusieurs valeurs de référence déterminées pour l'indice de capteur, notamment par le fabricant du débitmètre massique Coriolis et/ou lors de la fabrication du débitmètre massique Coriolis, notamment une ou plusieurs valeurs de référence représentant une fonctionnalité réduite de l'arrangement de capteurs et/ou une ou plusieurs valeurs de référence représentant un dysfonctionnement de l'arrangement de capteurs et/ou une ou plusieurs valeurs de référence représentant un débitmètre massique Coriolis qui n'est plus intact et/ou une erreur de phase due à un champ magnétique externe.

3. Débitmètre massique Coriolis selon la revendication précédente, pour lequel le circuit de transmetteur est conçu pour déterminer si une ou plusieurs valeurs caractéristiques pour l'indice de capteur est/sont supérieure(s) à l'au moins une valeur de référence pour l'indice de capteur, notamment à savoir si une ou plusieurs valeurs caractéristiques pour l'indice de capteur est/sont supérieure(s) à une ou plusieurs valeurs de référence représentant une capacité de fonctionnement réduite de l'arrangement de capteurs et/ou supérieure(s) à une ou plusieurs valeurs de référence représentant un dysfonctionnement de l'arrangement de capteurs et/ou supérieure(s) à une ou plusieurs valeurs de référence représentant un débitmètre massique Coriolis qui n'est plus intact et/ou des valeurs de référence représentant une erreur de phase accrue due à un champ magnétique externe, pour émettre un message signalant cela et/ou ne pas émettre de valeurs mesurées de débit massique.

4. Débitmètre massique Coriolis selon l'une des revendications précédentes,

   - pour lequel le circuit de transmetteur est conçu pour générer, à partir du premier signal de mesure de vibration (s1), une première séquence de composantes utiles, à savoir une séquence de valeurs d'amplitude numériques ($U1_{N1}[m]$) quantifiant l'amplitude ($U1_{N1}$) de la première composante utile ($s1_N$) ; et/ou
   - pour lequel le circuit de transmetteur est conçu pour générer, à partir du deuxième signal de mesure de vibration (s2), une deuxième séquence de composantes utiles, à savoir une séquence de valeurs d'amplitude numériques ($U2_{N1}[n]$) quantifiant l'amplitude ($U2_{N1}$) de la deuxième composante utile ($s2_N$).

5. Débitmètre massique Coriolis selon la revendication précédente,

   - pour lequel le circuit de transmetteur est conçu pour générer à partir du premier signal de mesure de vibration (s1) une première séquence de composantes harmoniques, à savoir une séquence de valeurs d'amplitude numériques ($U1_{N2}[k]$)) quantifiant l'amplitude ($U1_{N2}$) de la première composante harmonique ($s1_{N2}$) ; et/ou
   - pour lequel le circuit de transmetteur est conçu pour générer, à partir du deuxième signal de mesure de vibration (s2), une deuxième séquence de composantes harmoniques, à savoir une séquence de valeurs d'amplitude numériques ($U2_{N2}[l]$) quantifiant l'amplitude ($U2_{N2}$) de la deuxième composante harmonique (S2N2).

6. Débitmètre massique Coriolis selon la revendication précédente, pour lequel le circuit de transmetteur est conçu pour calculer des valeurs caractéristiques pour l'indice de capteur (SK1) en utilisant à la fois au moins l'une parmi la première et deuxième séquence de composantes utiles et au moins l'une parmi la première et la deuxième séquence de composantes harmoniques.

7. Débitmètre massique Coriolis selon l'une des revendications précédentes, pour lequel le circuit de transmetteur présente une mémoire de données électronique non volatile (EEPROM), laquelle est conçue pour conserver des données numériques, notamment même en l'absence d'une tension de service appliquée, notamment à savoir pour mémoriser une ou plusieurs valeurs de référence déterminées au préalable pour l'indice de capteur (SK1).

8. Débitmètre massique Coriolis selon la revendication précédente, pour lequel une ou plusieurs valeurs de référence pour l'indice de capteur - lesquelles valeurs sont déterminées au préalable, notamment par le fabricant du débitmètre massique Coriolis et/ou lors de la fabrication du débitmètre massique Coriolis et/ou pendant le fonctionnement du débitmètre massique Coriolis, notamment à savoir une ou plusieurs valeurs de référence représentant une fonctionnalité réduite de l'arrangement de capteurs et/ou à savoir une ou plusieurs valeurs de référence représentant un dysfonctionnement de l'arrangement de capteurs et/ou des valeurs de référence représentant une erreur de phase accrue due à un champ magnétique externe - sont stockées dans la mémoire de données électronique.

9. Débitmètre massique Coriolis selon la revendication 7 ou 8, pour lequel le circuit de transmetteur est conçu pour comparer respectivement une ou plusieurs valeurs caractéristiques pour l'indice de capteur avec une ou plusieurs valeurs de référence pour l'indice de capteur, lesquelles sont stockées dans la mémoire de données.

10. Débitmètre massique Coriolis selon l'une des revendications précédentes,

   - pour lequel le circuit de transmetteur est conçu pour déterminer les valeurs mesurées de débit massique avec un taux d'actualisation qui n'est pas inférieur, notamment supérieur, à un taux d'actualisation avec lequel le circuit de transmetteur détermine les valeurs caractéristiques pour l'indice de capteur ; et/ou

- pour lequel le circuit de transmetteur est conçu pour recevoir et évaluer une instruction de démarrage initiant au moins la détermination des valeurs caractéristiques pour le premier indice de capteur (SK1), à savoir pour détecter une entrée de l'instruction de démarrage et pour démarrer ensuite une détermination des valeurs caractéristiques pour le premier indice de capteur (SK1) ; et/ou

- pour lequel le circuit de transmetteur est conçu pour recevoir et évaluer une instruction d'arrêt empêchant au moins temporairement la détermination des valeurs caractéristiques pour le premier indice de capteur (SK1), à savoir pour détecter une entrée de l'instruction d'arrêt et arrêter ensuite au moins temporairement une détermination des valeurs caractéristiques pour le premier indice de capteur (SK1) ; et/ou

- pour lequel le circuit de transmetteur comporte un premier convertisseur analogique-numérique (A/N) pour le premier signal de mesure de vibration ainsi qu'un deuxième convertisseur analogique-numérique pour le deuxième signal de mesure de vibration.

11. Débitmètre massique Coriolis selon l'une des revendications précédentes,

- pour lequel le premier capteur de vibrations est formé au moyen d'une première bobine à noyau plongeur et le deuxième capteur de vibrations est formé au moyen d'une deuxième bobine à noyau plongeur ; et/ou
- le dispositif d'excitation destiné à l'excitation en vibrations de l'au moins un tube de mesure présentant un excitateur de vibrations (41), notamment électrodynamique et/ou unique ; et/ou
- l'au moins un élément vibrant étant formé au moyen d'au moins un tube, notamment au moins partiellement droit et/ou au moins partiellement en forme d'arc de cercle, lequel tube comprenant une paroi de tube, notamment métallique, et un canal intérieur enveloppé par ladite paroi de tube, et lequel tube étant conçu pour être traversé par le produit et être mis en vibrations pendant ce temps.

12. Débitmètre massique Coriolis selon l'une des revendications précédentes,

- pour lequel le premier capteur de vibrations présente un premier aimant permanent, lequel est relié mécaniquement à l'au moins un élément vibrant, notamment en formant le premier point de mesure, ainsi qu'une première bobine à air,

-- le premier aimant permanent formant un premier entrefer guidant le premier flux magnétique (B1) et la première bobine à air étant positionnée au moins partiellement à l'intérieur du même premier entrefer,
-- et le premier aimant permanent et la première bobine à air étant conçus pour être déplacés l'un par rapport à l'autre par des mouvements vibratoires de l'au moins un élément vibrant et pour générer une première tension d'induction servant de premier signal de mesure de vibration ; et

- pour lequel le deuxième capteur de vibrations présente un deuxième aimant permanent, lequel est relié mécaniquement à l'au moins un élément vibrant, notamment en formant le deuxième point de mesure, ainsi qu'une deuxième bobine à air,

-- le deuxième aimant permanent formant un deuxième entrefer guidant le deuxième flux magnétique (B2) et la deuxième bobine à air étant positionnée au moins partiellement à l'intérieur du deuxième entrefer,
-- et le deuxième aimant permanent et la deuxième bobine à air étant conçus pour être déplacés l'un par rapport à l'autre par des mouvements vibratoires de l'au moins un élément vibrant et pour générer une deuxième tension d'induction servant de deuxième signal de mesure de vibration.

Fig. 1

*Fig. 2*

EP 3 899 447 B1

*Fig. 3*

Fig. 4b

Fig. 4a

Fig. 5b

Fig. 5a

*Fig. 6a*

*Fig. 6b*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 564682 A
- EP 816807 A
- US 20020033043 A
- US 20060096390 A
- US 20070062309 A
- US 20070119264 A
- US 20080011101 A
- US 20080047362 A
- US 20080190195 A
- US 20080250871 A
- US 20100005887 A
- US 20100011882 A
- US 20100257943 A
- US 20110161017 A
- US 20110178738 A
- US 20110219872 A
- US 20110265580 A
- US 20110271756 A
- US 20120123705 A
- US 20130042700 A
- US 20160071639 A
- US 20160313162 A
- US 20160187176 A
- US 20170003156 A
- US 20170261474 A
- US 4491009 A
- US 4756198 A
- US 4777833 A
- US 4801897 A
- US 4876898 A
- US 4996871 A
- US 5009109 A
- US 5287754 A
- US 5291792 A
- US 5349872 A
- US 5705754 A
- US 5796010 A
- US 5796011 A
- US 5804742 A
- US 5831178 A
- US 5945609 A
- US 5965824 A
- US 6006609 A
- US 6092429 A
- US 6223605 B
- US 6311136 B
- US 6477901 B
- US 6505518 B
- US 6513393 B
- US 6651513 B
- US 6666098 B
- US 6711958 B
- US 6840109 B
- US 6883387 B
- US 6920798 B
- US 7017424 B
- US 7040181 B
- US 7077014 B
- US 7143655 B
- US 7200503 B
- US 7216549 B
- US 7296484 B
- US 7325462 B
- US 7360451 B
- US 7665369 B
- US 7792646 B
- US 7954388 B
- US 8201460 B
- US 8333120 B
- US 8695436 B
- WO 0019175 A
- WO 0034748 A
- WO 0102812 A
- WO 0102816 A
- WO 0171291 A
- WO 02060805 A
- WO 2005050145 A
- WO 2005093381 A
- WO 2007043996 A
- WO 2008013545 A
- WO 2008059262 A
- WO 2009148451 A
- WO 2010099276 A
- WO 2013092104 A
- WO 2014151829 A
- WO 2016058745 A
- WO 2017069749 A
- WO 2017123214 A
- WO 2017137347 A
- WO 2017143579 A
- WO 2018160382 A
- WO 2018174841 A
- WO 8505677 A
- WO 8802853 A
- WO 8803642 A
- WO 8900679 A
- WO 9421999 A
- WO 9503528 A

- WO 9516897 A
- WO 9529385 A
- WO 9529386 A
- WO 9802725 A
- WO 9940394 A
- WO 2018028932 A
- WO 2018007176 A
- WO 2018007185 A

- DE 102018102831
- US 5531126 A
- US 2018143064 A
- US B6223605 A
- US B6477901 A
- WO A A
- EP 2017067826 W